(19) **Europäisches Patentamt / European Patent Office / Office européen des brevets**

(11) **EP 3 502 843 B1**

(12) **FASCICULE DE BREVET EUROPEEN**

(45) Date de publication et mention
de la délivrance du brevet:
**19.10.2022 Bulletin 2022/42**

(21) Numéro de dépôt: **18201537.0**

(22) Date de dépôt: **19.10.2018**

(51) Classification Internationale des Brevets (IPC):
**G06F 3/01** $^{(2006.01)}$  **G01C 23/00** $^{(2006.01)}$
**F41G 3/22** $^{(2006.01)}$  **G02B 27/01** $^{(2006.01)}$

(52) Classification Coopérative des Brevets (CPC):
**G02B 27/017; G06F 3/011; G06F 3/012;**
G01C 23/00; G02B 2027/0138; G02B 2027/014;
G02B 2027/0187

(54) **PROCEDE D'HARMONISATION DUALE D'UN SOUS-SYSTEME DE DETECTION DE POSTURE INTEGRE DANS UN SYSTEME DE VISUALISATION TETE HAUTE PORTE**

DUALES HARMONISIERUNGSVERFAHREN EINES UNTERSYSTEMS ZUR DETEKTION DER HALTUNG, DAS IN EIN HEAD-UP-DISPLAYSYSTEM INTEGRIERT IST

DUAL HARMONISATION METHOD FOR A HEAD TRACKING SYSTEM INTEGRATED INTO A WORN HEAD-UP DISPLAY SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2017 FR 1701343**

(43) Date de publication de la demande:
**26.06.2019 Bulletin 2019/26**

(73) Titulaire: **Thales**
**92400 Courbevoie (FR)**

(72) Inventeur: **ROUZES, Siegfried**
**33700 MERIGNAC (FR)**

(74) Mandataire: **Atout PI Laplace**
**Immeuble "Visium"**
**22, avenue Aristide Briand**
**94117 Arcueil Cedex (FR)**

(56) Documents cités:
**EP-A1- 2 703 928**

• **TUCERYAN M ET AL: "Single point active alignment method (SPAAM) for optical see-through HMD calibration for AR", AUGMENTED REALITY, 2000. (ISAR 2000). PROCEEDINGS. IEEE AND ACM INTERNATIONAL SYMPOSIUM ON MUNICH, GERMANY 5-6 OCT. 2000, PISCATAWAY, NJ, USA,IEEE, US, 5 octobre 2000 (2000-10-05), pages 149-158, XP010520324, DOI: 10.1109/ISAR.2000.880938 ISBN: 978-0-7695-0846-7**
• **YAKUP GENC ET AL: "Practical Solutions for Calibration of Optical See-Through Devices", PROCEEDINGS / INTERNATIONAL SYMPOSIUM ON MIXED AND AUGMENTED RALITY : ISMAR 2002 ; SEPTEMBER 30 - OCTOBER 1,2002, DARMSTADT, GERMANY, IEEEE COMPUTER SOCIETY, LOS ALAMITOS, CALIF. [U.A.], 30 septembre 2002 (2002-09-30), page 169, XP058274986, ISBN: 978-0-7695-1781-0**
• **JENS GRUBERT ET AL: "A Survey of Calibration Methods for Optical See-Through Head-Mounted Displays", ARXIV.ORG, CORNELL UNIVERSITY LIBRARY, 201 OLIN LIBRARY CORNELL UNIVERSITY ITHACA, NY 14853, 13 septembre 2017 (2017-09-13), XP080820787, DOI: 10.1109/TVCG.2017.2754257**

• TUCERYAN M ET AL: "CALIBRATION REQUIREMENTS AND PROCEDURES FOR A MONITOR-BASED AUGMENTED REALITY SYSTEM", IEEE TRANSACTIONS ON VISUALIZATION AND COMPUTER GRAPHICS, IEEE SERVICE CENTER, LOS ALAMITOS, CA, US, vol. 1, no. 3, 1 septembre 1995 (1995-09-01), pages 255-273, XP000531649, ISSN: 1077-2626, DOI: 10.1109/2945.466720

**Description**

La présente invention concerne un procédé et un sous-système d'harmonisation duale d'un sous-système de détection de posture DDP intégré dans un système de visualisation tête haute porté.

Le système de visualisation tête haute porté et le sous-système de détection de posture sont embarqués à bord de véhicules porteurs, mobiles par rapport à un repère de référence d'un monde réel extérieur. Les véhicules sont en particulier des aéronefs, des avions civils ou militaires, des hélicoptères civils ou militaires.

Dans tous les cas, le sous-système de détection de posture a pour but de mettre à disposition du pilote ou du système de vision tête haute porté l'orientation angulaire ou la rotation relative d'un premier élément solide mobile S1 de poursuite, lié à la tête du pilote, et un deuxième élément solide fixe S2, lié soit au repère de la plateforme de l'aéronef, soit au repère géographique local, soit à un repère terrestre.

De manière générale, un sous-système de détection de posture est configuré pour mettre à disposition du pilote ou du système de pilotage une information de rotation tridimensionnelle 3D relative entre :

d'une part un premier élément mobile de poursuite S1 dudit sous-système de détection de posture DDP, solide et orientable suivant trois angles de rotation, ayant un premier repère orthonormée $R_{S1}$ et lié de manière solidaire à un dispositif de visualisation transparent $D_v$ permettant en même temps l'affichage d'informations de pilotage (images, symboles, consignes, mires) dans un repère $R_v$ dit de visualisation ou de visée, et l'observation d'objets d'un monde réel extérieur; et

d'autre part un deuxième élément fixe S2 dudit sous-système de détection de posture DDP, solide et ayant un deuxième repère orthonormé $R_{S2}$, et lié de manière solidaire à un dispositif de référence $D_{ref}$, ayant un repère dit de référence, désigné par $R_{ref}$, et pouvant être soit un repère du véhicule porteur, soit un repère géographique local, soit un repère terrestre.

Par définition, une liaison « solidaire » entre le premier élément solide orientable S1 du sous-système de détection de posture DDP et le dispositif de visualisation et de visée $D_v$ est une liaison rigide qui assure que la matrice de rotation $\hat{R}(R_{S1}/R_v)$ permettant le passage du premier repère orthonormée $R_{S1}$, attaché au premier élément solide de poursuite orientable S1 du sous-système de détection de posture, au repère de visualisation et de visée $R_v$ est une matrice de rotation invariante dans le temps.

Par définition, une liaison « solidaire » entre le deuxième élément solide S2 du sous-système de détection de posture DDP et le dispositif de référence fixe $D_{ref}$ est une liaison rigide qui assure que la matrice de rotation $\hat{R}(R_{S1}/R_v)$ permettant le passage du deuxième repère orthonormée $R_{S2}$ attaché au deuxième élément solide fixe S2 du système de détection de posture au repère fixe $R_{ref}$ est une matrice de rotation invariante dans le temps.

Souvent, le repère fixe de référence $R_{ref}$ est celui dans-lequel on connaît les coordonnées d'objets que l'on souhaite observer dans le repère de visualisation et d'alignement $R_v$ lié au système de visualisation et de visée. Le sous-système de détection de posture DDP permet alors de « projeter » les objets réels ou virtuels du repère de référence sur le repère de visualisation. En particulier, si ce système est transparent, on peut superposer les objets projetés sur leur image réelle et on parle alors de projection conforme.

Dans tous les cas, l'information de sortie utile $DDP_{utile}$ que l'on cherche à fournir au pilote ou au dispositif de pilotage, c'est-à-dire la rotation entre le repère $R_v$ du viseur du casque du pilote et le repère de référence $R_{ref}$ est différente de la sortie brute $DDP_{brute}$ calculée par le système de détection de posture DDP, i.e. la matrice de rotation mesurée et calculée entre un premier repère orthonormé $R_{S1}$, solidaire du repère de pointage et de visualisation $R_v$, et un deuxième repère orthonormé $R_{S2}$, solidaire du repère de référence $R_{ref}$.

De manière générale, la rotation calculée $DDP_{brute}$ au travers de sa matrice par le système de détection de posture est inexacte, c'est-à-dire différente de la rotation réelle entre le repère $R_v$ du viseur du casque du pilote et le repère de référence $R_{ref}$, encore appelée rotation de sortie utile $DDP_{utile}$.

La rotation calculée $DDP_{brute}$ de sortie brute calculée par le système de détection de posture DDP est inexacte notamment pour les raisons suivantes qui ne sont pas exclusives les unes des autres et peuvent être cumulées :

- la sortie brute $DDP_{brute}$, calculée par le système de détection de posture DDP, qui exprime la rotation entre un premier repère $R_{S1}$ du premier élément orientable S1 du DDP et un deuxième repère $R_{S2}$ du deuxième élément solide S2 du DDP est différente de la rotation de sortie utile $DDP_{utile}$ entre le repère $R_v$ du viseur du casque du pilote ou du dispositif de pointage souhaité ;

- la sortie brute calculée $DDP_{brute}$ n'est que partiellement déterminée un ou plusieurs de ses composantes matricielles ;

- la sortie brute calculée $DDP_{brute}$ a été altérée par l'apparition d'un biais ou décalage, par exemple suite à un choc ou un vieillissement ou une installation mal alignée.

A ce jour, pour rendre plus exacte la sortie brute calculée $DDP_{brute}$ il est connu de procéder à des alignements correctifs, mais ces alignements correctifs sont partiels et ne fonctionnent que pour un seul biais, ou une seule indéterminée identifiée, et à condition que seul ce défaut de biais existe.

De plus, lorsqu'une erreur de détection de posture est constatée, par exemple en observant une non-conformité, il est difficile, voire impossible selon les situations d'identifier l'erreur et de corriger la sortie brute calculé $DDP_{brute}$, en raison du fait que le défaut de détection de posture se traduit localement par une double altération possible de la matrice de sortie brute calculée $DDP_{brute}$, à gauche par une matrice gauche de rotation notée $G$, à droite par une matrice droite de rotation notée $\hat{D}$, les matrices de rotation $DDP_{utile}$, $DDP_{brute}$, $\hat{G}$ et $\hat{D}$, étant reliées par la relation suivante:

$$\mathrm{DDP_{utile}} = \widehat{\mathrm{G}} \cdot \mathrm{DDP_{brute}} \cdot \widehat{\mathrm{D}}$$

dans laquelle la matrice de sortie utile $DDP_{utile}$, la matrice de sortie brute $DDP_{brute}$, la matrice gauche de rotation $G$, la matrice droite de rotation $\hat{D}$ vérifient respectivement les relations suivantes :

$$DDP_{utile} = \hat{R}\left(R_{ref}/R_v\right)$$

$$DDP_{brute} = \hat{R}\left(R_{S2}/R_{S1}\right)$$

$$\hat{G} = \hat{R}\left(R_{ref}\right)/R_{S2}$$

$$\hat{D} = \hat{R}(R_{S1}/R_v)$$

A ce jour, les solutions d'harmonisation proposées de la matrice de sortie brute $DDP_{brute}$ sont des algorithmes complexes qui comporte au moins deux étapes, chaque étape correspondant à une harmonisation partielle d'un nombre limité de composantes de la matrice de sortie brute et exigeant que les composantes restantes qui ne sont pas harmonisées soient parfaitement connues sans quoi des défauts résiduels viennent altérer le résultat de l'harmonisation en cours. Ainsi, il n'est pas possible de réaliser une optimisation duale des défauts. En d'autres termes, les procédés d'harmonisation proposés et réalisés à ce jour sont des procédés complexes qui déterminent séparément les deux matrices de rotation gauche $G$ et droite $\hat{D}$, et ne permettent donc pas une optimisation duale des défauts.

De tels procédés d'harmonisation actuels sont décrits par exemple dans les documents suivants :

.- l'article de Tuceryan M. et al., intitulé « Single point active alignment method (SPAAM) for optical see-through HMD calibration for AR », publié dans Augmented Reality, 2000, (ISAR 2000), Symposium on Munich, Germany 5-6 oct. 2000, Piscataway, NJ, USA, IEEE, US, 5 octobre 2000, pages 149-158 ;

.- l'article de Yakup Genc et al., intitulé "Practical Solutions for Calibration of Optical See-Through Devices", publié dans Proceedings / International Symposium on mixed and augmented reality: ISMAR 2002; September 30 - October 1, 2002, Darmstadt, Germany, IEEE Computer Society, Los Alamitos, California, 30 septembre 2002, page 169;

.- l'article de Jens Grubert et al., intitulé "A survey of calibration methods for optical See-Through Head-Mounted displays", publié dans ARXIV.ORG, Cornell University Library, 201 OLIN library Cornell university Ithaca, NY 14853, 13 septembre 2017;

.- l'article de Tuceryan M. et al., intitulé « Calibration Requirements and Procédures for a Monitor-based Augmented Reality System », publié dans IEEE Transactions on Visualization and Computer Graphics, IEEE Service Center Los Alamitos, CA, US, vol. 1, no. 3, 1ier septembre 1995, pages 255-273 ; et

.- la demande de brevet EP 2 703 928 A1.

Par ailleurs, les procédés d'harmonisation actuels utilisent de manière excessive des fonctions trigonométriques qui sont sources multiples d'erreurs et d'imprécision, et inutiles pour harmoniser une sortie brute d'un système de détection de posture.

Le problème technique que résout l'invention est de remédier aux inconvénients précités et de fournir un procédé d'harmonisation duale de la rotation de sortie brute mesurée et calculée par un système de détection de posture qui détermine de manière globale, c'est à, dire en même temps, les matrices de rotation gauche $G$ et droite $\hat{D}$.

De manière particulière, le problème technique est de fournir un procédé d'harmonisation globale de la matrice de rotation de sortie brute, mesurée et calculée par un système de détection de posture, qui met en œuvre un seul

ensemble de stations de mesures sans connaître les sources d'altération.

La solution apportée permet de recalculer avec un seul set de mesures la sortie DDP utile, que l'on sache à l'avance ou non l'origine des altérations.

A cet effet, l'invention a pour objet un procédé d'harmonisation duale d'un sous-système de détection de posture DDP, intégré dans un système de visualisation tête haute porté, le système de visualisation tête haute porté étant embarqué dans un véhicule porteur et comprenant : un dispositif de visualisation $D_v$ tête haute porté transparent, un dispositif de référence extérieur $D_{ref}$, ayant un repère de référence extérieur $R_{ref}$, pouvant être soit un repère du véhicule porteur, soit un repère géographique local, soit un repère terrestre ; un sous-système de détection de posture DDP ayant un premier élément solide de poursuite S1, attaché rigidement à la et attaché solidairement au dispositif de visualisation $D_v$, un deuxième élément solide fixe S2, lié solidairement au dispositif de référence (14) $D_{ref}$, et un moyen de mesure et de détermination de l'orientation relative $\hat{K}$ du premier élément mobile de poursuite S1 par rapport au deuxième élément fixe S2 ; un sous-système d'harmonisation duale pour harmoniser le système de visualisation tête haute porté et le sous-système de détection de posture DDP.

Le procédé d'harmonisation duale comportant les étapes consistant à :

- - dans une première étape, effectuer une série d'un nombre prédéterminé N de mesures d'orientations relatives $\hat{K}_1$, i variant de 1 à N, du premier élément mobile de poursuite S1 par rapport au deuxième élément fixe S2 du sous-système de détection de posture DDP, correspondant à des visées Vi différentes, i variant de 1 à N, dans lesquels un ou plusieurs éléments différents prédéterminés d'informations de pilotage affichés dans le dispositif de visualisation $D_v$ sont superposés ou alignés avec un ou plusieurs amers correspondants du monde réel extérieur dont les matrices de rotation théoriques $\hat{U}_i$ dans le repère de référence extérieur sont connus ; puis
- - dans une deuxième étape et en utilisant un algorithme d'harmonisation duale, calculer conjointement la matrice d'orientation relative $\hat{R}(S1/v)$ du premier élément de poursuite du sous-système de détection de posture S1 vers dispositif de visualisation $D_v$ et/ou la matrice d'orientation relative $\hat{R}(ref/S2)$ du dispositif de référence externe $D_{Ref}$ vers deuxième élément solide fixe S2 du sous-système de détection de posture, respectivement comme la matrice de rotation de biais à droite $\hat{D}$ et la matrice de rotation de biais à gauche G solutions conjointes du système d'équations d'harmonisation duale : $\hat{U}_i = G \cdot \hat{K}_i \cdot \hat{D}$, i variant de 1 à N.

Selon l'invention, le procédé d'harmonisation duale d'un sous-système de détection de posture DDP comporte la caractéristique suivante:

- - le minimum du nombre de mesures N requis dépend du nombre L de degrés de liberté angulaire erronés ou inexploitables des matrices de rotation $\hat{R}(S1/v)$ et $\hat{R}(ref/S2)$ du système de visualisation en tête haute, ledit nombre L étant un entier supérieur ou égal à 1 et inférieur ou égal à 6, et la résolution du système d'équations $\hat{U}_i = \hat{G} \cdot \hat{K}_i \cdot \hat{D}$, i variant de 1 à N utilise un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A) - A$ sur l'ensemble des matrice de rotation 3 x3, pour déterminer la rotation à droite $\hat{D}$ et la rotation à gauche G

Selon des modes particuliers de réalisation, le procédé d'harmonisation duale comporte une ou plusieurs des caractéristiques suivantes prises isolément ou en combinaison:

- - suivant une première configuration, le nombre de degrés de liberté angulaire erronés ou inexploitables de la matrice de rotation de biais à droite $\hat{D}$, est égal à trois et le nombre de degrés de liberté angulaire erronés ou inexploitables de la matrice de rotation de biais à gauche G est égal à trois, la première étape effectue un nombre N supérieur ou égal à 3, de mesures pour lesquelles les visées Vi correspondent à un alignement de repères tridimensionnels affichés sur des repères tridimensionnels extérieurs observés, et la deuxième étape de résolution du système d'équations d'harmonisation duale comprend un premier ensemble de sous étapes consistant à : dans une première sous-étape, choisir une mesure "pivot" comme étant la première mesure parmi les N mesures et correspondant à i égal à 1, et pour i = 2, $\cdots$, N on calcule les matrices de rotations $\hat{U}_{1,i}$ et $\hat{K}_{1,i}$ à l'aide des équations : $\hat{U}_{1,i} = \hat{U}_1^T \cdot \hat{U}_i$ et $\hat{K}_{1,i} = \hat{K}_1^T \cdot \hat{K}_i$; puis dans une deuxième sous-étape, déterminer pour i = 2, $\cdots$, N, les vecteurs unitaires principaux des rotations $\hat{U}_{1,i}$ et $\hat{K}_{1,i}$, désignés respectivement par $\vec{u}_i$ et $\vec{k}_i$ ; ensuite dans une troisième sous-étape, calculer la matrice droite $\hat{D}$ à l'aide de l'équation : $\hat{D} = \pi(\sum_{i \geq 2}(\vec{k}_i \cdot \vec{u}_i^T))$ ; ensuite dans une quatrième sous-étape, déterminer la matrice de rotation à gauche G à partir de la matrice $\hat{D}$ calculée dans la troisième sous-étape (318), à l'aide de l'équation :

$$\widehat{G} = \pi\left(\sum_{i\geq 1}\left(\widehat{U}_i \cdot \widehat{D}^T \cdot \widehat{K}_i{}^T\right)\right)$$

- - suivant une deuxième configuration, le nombre de degrés de liberté angulaire erronés ou inexploitables de la matrice de rotation de biais à droite $\hat{D}$, est égal à trois et le seul degré de liberté angulaire erroné ou inexploitable de la matrice de rotation de biais à gauche $G$ , est l'angle de gisement, étant supposé que les angles de site et de roulis sont connus avec une précision suffisante ; la première étape effectue un nombre N supérieur ou égal à 4, de mesures pour lesquelles les visées Vi correspondent à un alignement de repères tridimensionnels affichés sur des repères tridimensionnels observés ; et la deuxième étape de résolution du système d'équations d'harmonisation duale comprend un deuxième ensemble de sous étapes consistant à : dans une quatrième sous-étape, pour i = 2, $\cdots,N$ , calculer les matrices $\hat{U}_{1,i}$ et les vecteurs $\vec{q}_i$ à l'aide des équations: $\hat{U}_{1,i} = \hat{U}_1{}^T \cdot \hat{U}_i$ et $\vec{q}_i = \hat{Q}_i{}^T \cdot \vec{k}$, le vecteur $\vec{k}$

étant défini par l'équation $\vec{k} = \begin{pmatrix} 0 \\ 0 \\ 1 \end{pmatrix}$ ; puis dans une cinquième sous-étape d'initialisation, initialiser une première suite de matrices $\{\hat{D}_{[s]}\}$, [s] désignant le rang entier courant de parcours de la suite $\{\hat{D}_{[s]}\}$, en mettant $\hat{D}_{[0]}$ égale à $I_3$ , $I_3$ désignant la matrice identité ; ensuite répéter une sixième sous-étape itérative faisant passer de l'itération [s] à [s+1] en calculant la valeur vectorielle $\vec{d}_{[s+1]}$, puis la valeur $\hat{D}_{[s+1]}$ de la première suite matricielle $\{\hat{D}_{[s]}\}$, à l'aide des équations suivantes :

$$\vec{d}_{[s+1]} = \frac{\sum_{i\geq 2}\left(\hat{U}_{1,i} \cdot \widehat{D}_{[s]}^T \cdot \vec{q}_i\right)}{\left\|\sum_{i\geq 2}\left(\hat{U}_{1,i} \cdot \widehat{D}^T \cdot \vec{q}_i\right)\right\|}$$

$$\widehat{D}_{[s+1]} = \pi\left(\sum_{i\geq 2}\left(\vec{q}_i \cdot \vec{d}_{[s+1]}^T \cdot \hat{U}_{1,i}\right)\right)$$

la suite $\{\vec{d}_{[s]}\}$ désignant une deuxième suite auxiliaire de vecteurs et la suite $\{\hat{D}_{[s]}\}$ convergeant vers $D$ ; et arrêter dans une septième sous-étape le processus itératif effectué au travers de la sixième sous-étape lorsque la limite $D$ est approximée avec une précision suffisante définie par une valeur prédéterminée de seuil ;

- - suivant une troisième configuration, le nombre de degrés de liberté angulaire erronés ou inexploitables de la matrice de rotation de biais à droite $D$ , est égal à trois et le nombre de degrés de liberté angulaire erronés ou inexploitables de la matrice de rotation de biais à gauche $G$ est égal à trois ; et la première étape effectue un nombre N supérieur ou égal à 4, de mesures pour lesquelles les visées Vi correspondent à un alignement de plusieurs directions de visée $\vec{x}_i$ différentes sur plusieurs directions extérieures visées , connues dans le repère extérieur de référence $R_{Ref}$ sans ajustement de roulis, les familles vectorielles $\{\vec{x}_i\}$ et $\{\vec{y}_i\}$ étant toutes deux libres ; et la deuxième étape de résolution du système d'équations d'harmonisation duale : $\vec{y}_i = \hat{G} \cdot \hat{K}_i \cdot \hat{D} \cdot \vec{x}_i$ pour i variant de 1 à N comprend un troisième ensemble de sous-étapes suivantes consistant à : dans une huitième sous-étape d'initialisation, initialiser une première suite de matrices gauches $\{\widehat{G}_{[s]}\}$ , [s] désignant le rang entier de parcours de cette première suite, en mettant $\hat{G}_{[0]}$ égal à $I_3$ , $I_3$ désignant la matrice identité ; puis répéter une neuvième sous-étape itérative faisant passer de l'itération [s] à [s + 1], en calculant la matrice $\hat{D}_{[s+1]}$ puis la matrice $\hat{G}_{[s+1]}$ à l'aide des équations suivantes : :

$$\widehat{D}_{[s+1]} = \pi\left(\sum_{i\geq 1}\left(\widehat{K}_i{}^T \cdot \widehat{G}^T{}_{[s]} \cdot \vec{y}_i \cdot \vec{x}_i{}^T\right)\right)$$

$$\widehat{G}_{[s+1]} \;=\; \pi\left(\sum_{i\geq 1}\left(\vec{y}_i \cdot \vec{x}_i{}^{T} \cdot \widehat{D}^{T}{}_{[s+1]} \cdot \widehat{K}_i{}^{T}\right)\right)$$

la suite $(\widehat{D}_{[s]})$ désignant une deuxième suite de matrices droites, et les suites $\widehat{D}_{[s]}$ et $\widehat{G}_{[s]}$ convergeant respectivement vers D et G ; et arrêter dans une dixième sous-étape d'arrêt, le processus itératif exécuté au travers de la neuvième sous-étape lorsque les limites D et G sont approximées avec une précision suffisante ;

- • - suivant une quatrième configuration, le nombre de degrés de liberté angulaire erronés ou inexploitables de la matrice de rotation de biais à droite D , est égal à trois et la matrice de rotation de biais à gauche G est supposée connue ; et la première étape effectue un nombre N supérieur ou égal à 3, de mesures pour lesquelles les visées Vi correspondent à un alignement de N directions de visée $x_i$ différentes sur une seule et même direction extérieure visée $\vec{y_0}$, connue dans le repère extérieur de référence $R_{Ref}$ sans ajustement de roulis, la famille vectorielle $\{\vec{x_i}\}$ étant libre ; et la deuxième étape de résolution du système d'équations d'harmonisation duale : $\hat{G} \cdot \hat{K}_i \cdot D \cdot \vec{x}_i = \vec{y_0}$ pour i variant de 1 à N détermine la matrice de rotation de biais droite $\hat{D}$ par l'équation suivante :

$$\widehat{D} \;=\; \pi\left(\sum_{i\geq 1}\left(\widehat{K}_i{}^{T} \cdot \widehat{G}^{T} \cdot \vec{y_0} \cdot \vec{x}_i{}^{T}\right)\right) ;$$

- • - suivant une cinquième configuration, le nombre de degrés de liberté angulaire erronés ou inexploitables de la matrice de rotation de biais à droite D est égal à trois et la matrice de rotation de biais à gauche G est supposée connue ; et la première étape effectue un nombre N supérieur ou égal à 4, de mesures pour lesquelles les visées Vi correspondent à un alignement de N directions de visée $\vec{x_i}$ différentes sur une seule et même direction extérieure visée $\vec{y_0}$ inconnue sans ajustement de roulis, la famille vectorielle $\{\vec{x_i}\}$ étant libre, et la deuxième étape de résolution du système d'équations d'harmonisation duale : $\hat{G} \cdot \hat{K}_i \cdot \hat{D} \cdot \vec{x}_i = \vec{y_0}$ pour i variant de 1 à N comprend un cinquième ensemble de sous-étapes consistant à : dans une onzième sous-étape d'initialisation, initialiser une première suite de matrices droites $\{\hat{D}_{[s]}\}$, [s] désignant le rang entier de parcours de la suite $\{\hat{D}_{[s]}\}$, en mettant $\hat{D}_{[0]}$ égal à $I_3$ , $I_3$ désignant la matrice identité ; puis répéter une douzième sous-étape itérative faisant passer de l'itération [s] à [s + 1] en calculant le vecteur $\vec{y}_{[s+1]}$ puis la matrice $\hat{D}_{[s+1]}$ à l'aide des équations suivantes :

$$\vec{y}_{[s+1]} = \frac{\sum_{i\geq 1}\left(\widehat{G} \cdot \widehat{K}_i \cdot \widehat{D}_{[s]} \cdot \vec{x}_i\right)}{\left\|\sum_{i\geq 1}\left(\widehat{G} \cdot \widehat{K}_i \cdot \widehat{D}_{[s]} \cdot \vec{x}_i\right)\right\|}$$

$$\widehat{D}_{[s+1]} \;=\; \pi\left(\sum_{i\geq 1}\left(\widehat{K}_i{}^{T} \cdot \widehat{G}^{T} \cdot \vec{y}_{[s+1]} \cdot \vec{x}_i{}^{T}\right)\right)$$

la suite $\{\vec{y}_{[s]}\}$ désignant une deuxième suite de vecteurs de direction externe, et les suites $\{\vec{y}_{[s]}\}$ et $\{\hat{D}_{[s]}\}$ convergeant respectivement vers $\vec{y_0}$ et $\hat{D}$ ; et arrêter dans une treizième sous-étape d'arrêt le processus itératif effectué au travers de la douzième sous-étape lorsque les limites D et G sont approximées avec une précision suffisante définie par une ou deux valeurs seuil prédéterminées ;

- • - suivant une sixième configuration, le nombre de degrés de liberté angulaire erronés ou inexploitables de la matrice de rotation de biais à droite D est égal à trois, et la matrice de rotation de biais à gauche G est inconnue et indéterminable ; et la première étape effectue un nombre N supérieur ou égal à 4, de mesures pour lesquelles les visées Vi correspondent à un alignement de N directions de visée $\vec{x_i}$ différentes sur une seule et même direction extérieure visée $\vec{y_0}$ inconnue sans ajustement de roulis, la famille vectorielle $\{\vec{x_i}\}$ étant libre, et ramène la résolution du système d'équations d'harmonisation duale: $\hat{G} \cdot \hat{K}_i \cdot \hat{D} \cdot \vec{x}_i = \vec{y_0}$ pour i variant de 1 à N, à la résolution du système réduit d'équations d'harmonisation duale : $\hat{K}_i \cdot D \cdot \vec{x}_i = \vec{z_0}$ pour i variant de 1 à 4, en notant $\vec{z_0} = \hat{G}^{T} \cdot \vec{y_0}$, ; et la deuxième étape de résolution du système réduit d'équations d'harmonisation duale comprend un sixième ensemble de sous-étapes consistant à : dans une quatorzième sous-étape d'initialisation, initialiser une première suite de matrices droites $(\hat{D}_{[s]})$ , [s] désignant le rang entier de parcours de la suite $\{\hat{D}_{[s]}\}$, en mettant $\hat{D}_{[0]}$ égal à $I_3$ , $I_3$ désignant la

matrice identité ; puis répéter une quinzième sous-étape itérative faisant passer de l'itération [s] à [s + 1] en calculant le vecteur $\vec{z}_{[s+1]}$, puis la matrice $\widehat{D}_{[s+1]}$ de la première suite matricielle à l'aide des équations suivantes :

$$\vec{z}_{[s+1]} = \frac{\sum_{i\geq 1}\left(\widehat{K}_i \cdot \widehat{D}_{[s]} \cdot \vec{x}_i\right)}{\left\|\sum_{i\geq 1}\left(\widehat{K}_i \cdot \widehat{D}_{[s]} \cdot \vec{x}_i\right)\right\|}$$

$$\widehat{D}_{[s+1]} = \pi\left(\sum_{i\geq 1}\left(\widehat{K}_i^{\ T} \cdot \vec{z}_{[s+1]} \cdot \vec{x}_i^{\ T}\right)\right)$$

la suite $\{\vec{z}_{[s]}\}$ désignant une deuxième suite auxiliaire de vecteurs et la suite $\{\widehat{D}_{[s]}\}$ convergeant D ; et arrêter dans une seizième sous-étape d'arrêt le processus itératif effectué au travers de la quinzième sous-étape lorsque la limite D est approximée avec une précision suffisante définie par une valeur de seuil prédéterminée ;

- • - suivant une septième configuration, le nombre de degrés de liberté angulaire erronés ou inexploitables de la matrice de rotation de biais à gauche *G* est égal à trois et la matrice de rotation de biais à droite *D* est supposée connue ; et la première étape effectue un nombre N supérieur ou égal à 3, de mesures pour lesquelles les visées Vi correspondent à un alignement d'une seule et même direction de visée $\vec{x}_0$ connue sur N directions extérieures visées $\vec{y}_i$ connues sans ajustement de roulis, la famille vectorielle $\{\vec{y}_i\}$ étant libre, et la deuxième étape de résolution du système d'équations d'harmonisation duale : $\widehat{G} \cdot \widehat{K}_i \cdot D \cdot \vec{x}_0 = \vec{y}_i$, pour i variant de 1 à N, détermine la matrice de rotation gauche cherchée *G* à l'aide de l'équation : $G = \pi(\sum_{i\geq 1}(\vec{y}_i \cdot \vec{x}_0^T \cdot \widehat{D}^T \cdot \widehat{K}_i^T))$;

- • - suivant une huitième configuration, le nombre de degrés de liberté angulaire erronés ou inexploitables de la matrice de rotation de biais à gauche $\widehat{G}$ est égal à trois et la matrice de rotation de biais à droite *D* est supposée connue ; et la première étape effectue un nombre N supérieur ou égal à 4, de mesures pour lesquelles les visées Vi correspondent à un alignement d'une seule et même direction de visée $\vec{x}_0$ inconnue sur N directions extérieures visées $\vec{y}_i$ connues sans ajustement de roulis, la famille vectorielle $\{\vec{y}_i\}$ étant libre ; et la deuxième étape de résolution du système d'équations d'harmonisation duale : $\widehat{G} \cdot \widehat{K}_i \cdot D \cdot \vec{x}_0 = \vec{y}_i$, pour i variant de 1 à N, comprend un huitième ensemble (812) de sous-étapes consistant à : dans une dix-septième sous-étape, initialiser une première suite de matrices gauche $\{\widehat{G}_{[s]}\}$, [s] désignant le rang entier de parcours de la suite $\{\widehat{G}_{[s]}\}$, est initialisée en mettant $\widehat{G}_{[0]}$ égal à $I_3$ , $I_3$ désignant la matrice identité ; puis répéter une dix-huitième sous-étape itérative faisant passer de l'itération [s] à [s + 1] en calculant le vecteur $\vec{x}_{[s+1]}$ puis la matrice $\widehat{G}_{[s+1]}$ à l'aide des équations suivantes :

$$\vec{x}_{[s+1]} = \frac{\sum_{i\geq 1}\left(\widehat{D}^T \cdot \widehat{K}_i^{\ T} \cdot \widehat{G}_{[s]}^T \cdot \vec{y}_i\right)}{\left\|\sum_{i\geq 1}\left(\widehat{D}^T \cdot \widehat{K}_i^{\ T} \cdot \widehat{G}_{[s]}^T \cdot \vec{y}_i\right)\right\|}$$

$$\widehat{G}_{[s+1]} = \pi\left(\sum_{i\geq 1}\left(\vec{y}_i \cdot \vec{x}_{[s+1]}^{\ T} \cdot \widehat{D}^T \cdot \widehat{K}_i^{\ T}\right)\right)$$

la suite $\{\vec{x}_{[s]}\}$ désignant une deuxième suite de vecteurs de direction viseur, les suites $\widehat{G}_{[s]}$ et $\vec{x}_{[s]}$ convergeant respectivement vers G et $\vec{x}_0$ ; et dans une dix-neuvième sous-étape d'arrêt (818), arrêter le processus itératif, effectué au travers de la dix-septième sous-étape, lorsque les limites G et éventuellement $\vec{x}_0$ sont approximées avec une précision suffisante définie par une ou deux valeurs de seuil prédéterminées ;

- • - le système de visualisation en tête haute est embarqué à bord d'un véhicule porteur compris dans l'ensemble des aéronefs, des avions, des hélicoptères, des automobiles, des robots.

L'invention a également pour objet un système de visualisation tête haute porté, embarqué dans un véhicule porteur, et comprenant : un dispositif de visualisation tête haute porté $D_v$ transparent ; un dispositif de référence $D_{ref}$ ,

ayant un repère de référence $R_{ref}$ pouvant être soit un repère du véhicule porteur, soit un repère géographique local, soit un repère terrestre ; un sous-système de détection de posture DDP, ayant un premier élément solide de poursuite S1, attaché rigidement et solidairement au dispositif de visualisation $D_v$ ; un deuxième élément solide fixe S2, lié solidairement au dispositif de référence $D_{ref}$, et un moyen de mesure et de détermination de l'orientation relative $\hat{K}$ du premier élément mobile de poursuite S1 par rapport au deuxième élément fixe S2 ; un sous-système d'harmonisation duale pour harmoniser le système de visualisation tête haute porté et le sous-système de détection de posture DDP, le sous-système d'harmonisation duale ayant un calculateur d'harmonisation duale et un interface IHS pour gérer les acquisitions des mesures d'harmonisation.

Le sous-système d'harmonisation duale et le sous-système de détection de posture DDP sont configurées pour :

- • - dans une première étape, effectuer une série d'un nombre prédéterminé N de mesures d'orientations relatives $\hat{K}_i$, i variant de 1 à N, du premier élément mobile de poursuite S1 par rapport au deuxième élément fixe S2 du sous-système de détection de posture DDP, correspondant à des visées Vi différentes, i variant de 1 à N, dans lesquels un ou plusieurs éléments différents prédéterminé d'informations de pilotage affichés dans le dispositif de visualisation $D_v$ sont superposés ou alignés avec un ou plusieurs amers correspondants du monde réel extérieur ; puis
- • - dans une deuxième étape et en utilisant un algorithme d'harmonisation duale, calculer conjointement la matrice d'orientation relative $\hat{R}(S1/v)$ du premier élément de poursuite du sous-système de détection de posture S1 vers dispositif de visualisation $D_v$ et/ou la matrice d'orientation relative $\hat{R}(ref/S2)$ du dispositif de référence externe $D_{Ref}$ vers deuxième élément solide fixe S2 du sous-système de détection de posture, respectivement comme la matrice de rotation de biais à droite $\hat{D}$ et la matrice de rotation de biais à gauche $G$ solutions conjointes du système d'équations d'harmonisation duale : $\hat{U}_i = G \cdot \hat{K}_i \cdot \hat{D}$ , i variant de 1 à N.

Selon l'invention, le système de visualisation tête haute porté comporte les caractéristiques suivantes:

- • - le minimum du nombre de mesures N requis dépend du nombre L de degrés de liberté angulaire erronés ou inexploitables des matrices de rotation $\hat{R}(S1/v)$ et $\hat{R}(ref/S2)$ du système de visualisation en tête haute, ledit nombre L étant un entier supérieur ou égal à 1 et inférieur ou égal à 6, et la résolution du système d'équations $\hat{U}_i = G \cdot \hat{K}_i \cdot \hat{D}$ , i variant de 1 à N utilise un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A)$ - $A$ sur l'ensemble des matrice de rotation 3 x3, pour déterminer la rotation à droite $\hat{D}$ et la rotation à gauche $G$

Selon des modes particuliers de réalisation:

- • - le sous-système d'harmonisation duale et le sous-système de détection de posture DDP sont configurées pour mettre en œuvre les première et deuxième étapes telles que définies ci-dessus.

L'invention a également pour objet un véhicule porteur, compris dans l'ensemble des aéronefs, des avions, des hélicoptères, des automobiles, des robots, et dans lequel est installé un système de visualisation tête haute porté tel que défini ci-dessus.

L'invention sera mieux comprise à la lecture de la description de plusieurs formes de réalisation qui va suivre, donnée uniquement à titre d'exemple et faite en se référant aux dessins sur lesquels :

- • - la Figure 1 est une vue générale d'un système de vision tête haute porté selon l'invention permettant l'harmonisation duale du sous-système de détection de posture constituant partiellement ledit système de vision en tête haute ;
- • - la Figure 2 est un ordinogramme générale d'un procédé d'harmonisation duale du sous-système de détection de posture intégré dans le système de vision tête haute porté;
- • - la Figure 3 est un ordinogramme d'un premier mode de réalisation particulier d'un procédé d'harmonisation duale selon l'invention ;
- • - la Figure 4 est un ordinogramme d'un deuxième mode de réalisation particulier d'un procédé d'harmonisation duale selon l'invention ;
- • - la Figure 5 est un ordinogramme d'un troisième mode de réalisation particulier d'un procédé d'harmonisation duale selon l'invention ;
- • - la Figure 6 est un ordinogramme d'un quatrième mode de réalisation particulier d'un procédé d'harmonisation duale selon l'invention ;
- • - la Figure 7 est un ordinogramme d'un cinquième mode de réalisation particulier d'un procédé d'harmonisation duale selon l'invention ;
- • - la Figure 8 est un ordinogramme d'un sixième mode de réalisation particulier d'un procédé d'harmonisation duale selon l'invention ;
- - la Figure 9 est un ordinogramme d'un septième mode de réalisation particulier d'un procédé d'harmonisation duale selon l'invention ;
- - la Figure 10 un ordinogramme d'un huitième mode de réalisation particulier d'un procédé d'harmonisation duale selon l'invention.

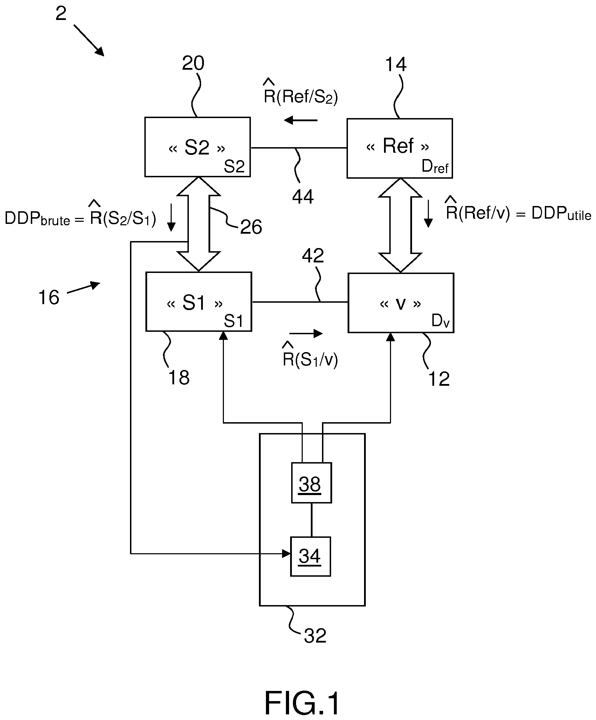

Suivant la Figure 1, un système de visualisation en tête haute 2 selon l'invention, embarqué sur un véhicule porteur mobile, par exemple un aéronef, comprend les dispositifs et moyens suivants :

- - un dispositif d'affichage ou de visualisation 12 tête haute porté transparent, désigné par $D_v$, positionné devant l'œil d'un pilote et apte à lui servir de viseur, par exemple une lentille ;
- - un dispositif de référence 14, désigné par $D_{ref}$, ayant un repère de référence, désigné par $R_{ref}$, pouvant être soit un repère du véhicule porteur, soit un repère géographique local, soit un repère terrestre ;
- - un sous-système 16 de détection de détection de posture DDP, ayant :

un premier élément solide de poursuite 18 S1, angulairement mobile, attaché rigidement à la tête ou au casque du pilote, et attaché solidairement ou rigidement au dispositif de visualisation 12 $D_v$ ;
un deuxième élément solide fixe 20 S2, lié solidairement au dispositif de référence 14 $D_{ref}$, et
un moyen 26 de mesure et de détermination de l'orientation relative $\hat{R}(R_{S2}/R_{S1})$ du premier élément mobile de poursuite 18 S1 par rapport au deuxième élément fixe 22 S2, lié solidairement au dispositif de référence 14 $D_{ref}$, l'orientation relative étant également notée $\hat{R}(R_{S2}/R_{S1})$ ;

- - un sous-système d'harmonisation duale 32 pour harmoniser les composantes du système de visualisation tête haute 2 et le sous-système de détection de posture DDP 16, le sous-système d'harmonisation duale 32 ayant un calculateur d'harmonisation duale 34 et un Interface Homme Système 38, configuré pour réaliser et gérer les opérations d'interface entre l'opérateur ou le pilote et les composantes du système de visualisation tête haute 2 pendant la mise en œuvre du procédé d'harmonisation duale selon l l'invention.

Par la suite, un repère noté « $R_i$ » sera noté de manière simplifié par « i ».
Par la suite, la notation de matrice de rotation « $\hat{R}(R_i/R_j)$ » sera simplifiée en la notation « $\hat{R}(i/j)$ ». Ainsi, par exemple la matrice $\hat{R}(R_{S2}/R_{S1})$ sera notée de manière simplifiée la matrice $\hat{R}(S2/S1)$.
Par la suite, les moyens permettant de connaitre l'orientation relative d'un repère « i » à un autre « j » sont assimilés dans la suite de ce document à la matrice décrivant cette orientation. En effet, l'orientation $\hat{R}(i/j)$ d'un repère « i » par rapport à un autre « j » peut être décrite indifféremment par :

- - trois angles appelés angles d'Euler, qui conventionnellement en aéronautique, correspondant à l'ordre des rotations pour ces angles suivant :

- * Gisement : rotation autour de l'axe z qui est orienté vers le bas (ou vers la Terre) ;
- * Site : rotation autour de l'axe y qui est orienté vers la droite (ou vers l'est de la Terre) ;
- * Roulis : rotation autour de l'axe x qui est orienté vers l'avant (ou vers le nord de la Terre),
- - une matrice 3x3 décrivant cette rotation.

La matrice $\hat{R}(i/j)$ décrivant l'orientation relative du repère « i » par rapport à « j » (ou de « i » vers « j ») permet de relier l'expression vi d'un vecteur dans le repère « i » et l'expression vj de ce même vecteur dans le repère « j » par la relation : vi = M(i/j) * vj et la relation de passage entre repères « i », « j », et « k » s'écrit : $\hat{R}(i/k) = R(j/k) * \hat{R}(i/j)$
La liaison solidaire entre le premier élément solide mobile de poursuite S1 18 du sous-système de détection de posture DDP 16 et le dispositif de visualisation et de visée 12 $D_v$ est une première liaison 42 supposée rigide qui assure que la matrice de rotation $\hat{R}(S1/v)$ permettant le passage du premier repère orthonormée $R_{S1}$ attaché au premier élément solide orientable S1 du sous-système de détection de posture DDP 16 au repère de visualisation et de visée $R_v$ est une matrice de rotation invariante dans le temps.
La liaison solidaire entre le deuxième élément solide 20 S2 du sous-système de détection de posture DDP 16 et le dispositif de référence fixe 14 $D_{ref}$ est une deuxième liaison rigide qui assure que la matrice de rotation $\hat{R}(Ref/S2)$ permettant le passage repère fixe $R_{ref}$ au deuxième repère orthonormée $R_{S2}$ attaché au deuxième élément solide fixe S2 du sous-système de détection de posture DDP 16 est une matrice de rotation invariante dans le temps.
De manière générale, le repère fixe de référence $R_{ref}$ est celui dans-lequel on connaît les coordonnées d'objets que l'on souhaite observer dans le repère de visualisation et d'alignement $R_v$ lié au dispositif de visualisation et de visée 12 $D_v$. Le sous-système de détection de posture DDP 16 permet alors de « projeter » les objets réels ou virtuels du repère de référence sur le repère de visualisation. En particulier, si le dispositif de visualisation 12 $D_v$ est transparent, on peut superposer les objets projetés sur leur image réelle et on parle alors de projection conforme.

Dans tous les cas, l'information de sortie utile $DDP_{utile}$ que l'on cherche à fournir au pilote ou au dispositif de pilotage, c'est-à-dire la rotation entre le repère $R_v$ du viseur du casque du pilote et le repère de référence $R_{ref}$ est différente de la sortie brute $DDP_{brute}$ calculée par le système de détection de posture DDP, i.e. la matrice de rotation mesurée et calculée entre le premier repère orthonormé $R_{S1}$, solidaire au travers de la première liaison 42 du repère de visualisation et de visée $R_v$, et le deuxième repère orthonormé $R_{S2}$, solidaire au travers de la deuxième liaison 44 du repère de référence $R_{ref}$.

L'information utile $DDP_{utile}$ que l'on cherche à fournir au pilote ou au dispositif de pilotage et la sortie brute $DDP_{brute}$ calculée par le sous-système de détection de posture DDP sont alors reliées par la relation :

$$DDP_{utile} = \hat{R}(Ref/S2) * DDP_{brute} * \hat{R}(S1/v)$$

déduite de la relation :

$$\hat{R}(Ref/v) = \hat{R}(Ref/S2) * \hat{R}(S2/S1) * \hat{R}(S1/v)$$

Suivant le procédé d'harmonisation duale de l'invention, il est supposé que les matrices d'erreurs à gauche et à droite, $\hat{R}(Ref/S2)$ et $\hat{R}(S1/v)$, sont des matrices invariantes dans le temps et des matrices de rotation.

La détermination de ces matrices d'erreurs gauche et droite $\hat{R}(Ref/S2)$ et $\hat{R}(S1/v)$ est rendue possible par:

- • - la fourniture d'un nombre N de mesures d'orientations $DDP_{brute}$ effectuées par le système de détection de posture correspondant à différentes stations de mesure, c'est-à-dire des pointages ou visées différentes utilisant un amer ou plusieurs amers réels ou virtuels différents, dont on connait les attitudes dans le repère de référence avec les matrices de rotation réelle $DDP_{utile}$ ,
- • - des algorithmes de résolution d'un système d'équations d'harmonisation duale :

  $DDP_{utile}(i) = \hat{G} \cdot DDP_{brute}(i) \cdot D$ , i variant de 1 à N,
  fondés sur l'utilisation d'une méthode mathématique permettant de redresser une matrice quelconque A, en pratique inversible, en une matrice de rotation.

Le redressement consiste à trouver dans l'ensemble des matrices de rotation la matrice de rotation $\pi(A)$ la plus proche de la matrice A au sens des moindres carrés sur l'ensemble des termes de ladite matrice A. $\pi(A)$ est appelée la redressée de A et $\pi(.)$ désigne l'opérateur de redressement.

Le système de visualisation en tête haute est configuré, au travers du sous-système d'harmonisation duale 16 notamment, pour mettre en œuvre l'ensemble des modes de réalisation décrits ci-après du procédé d'harmonisation duale selon l'invention.

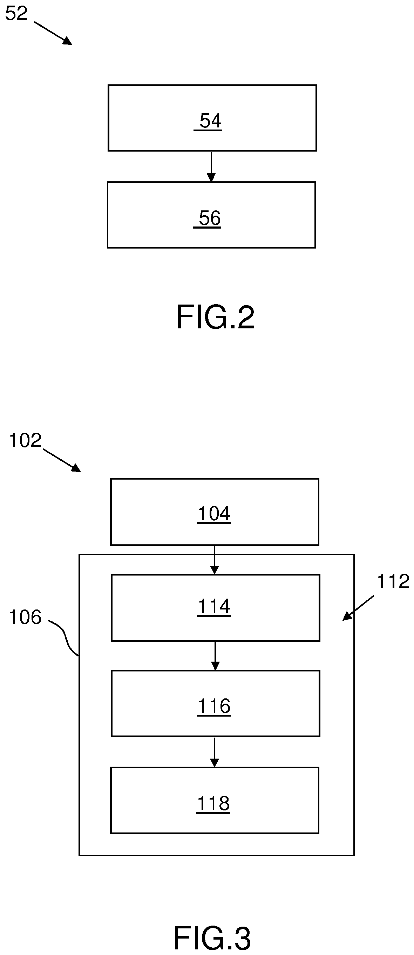

Suivant la Figure 2 et de manière générale, un procédé d'harmonisation duale 52 du sous-système de détection de posture DDP 16 intégré dans le système de visualisation en tête haute 2 ou d'une matrice de rotation de sortie quelconque mesurée et calculée par le sous-système de détection une première étape 54 et une deuxième étape 56, exécutées successivement.

Dans la première étape 54 d'acquisitions de mesures, un nombre N de mesures d'orientations ou de matrices de sorties $DDP_{brute}(i)$, notées par la suite $\hat{K}_i$, i variant de 1 à N et désignant un indice d'identification de chaque mesure.

Les mesures des matrices $\hat{K}_i$, i variant de 1 à N, correspondent à différentes stations de mesure ou visées différentes Vi utilisant un amer ou plusieurs amers réels différents, et dont on connait de manière théorique la valeur de DDP utile attendue $DDP_{utile}(i)$, désignée par la suite par $\hat{U}_i$.

Pour chaque station de mesure ou visée Vi, la valeur de rotation de sortie $\hat{K}_i$ calculée par le sous-système de détection de posture DDP 16, et la valeur de rotation utile attendue $\hat{U}_i$ sont liées par la relation constitutive du système harmonisé : $\hat{U}_i = G \cdot \hat{K}_i \cdot \hat{D}$.

Dans la deuxième étape 56, les matrices G et $\hat{D}$ de biais gauche et droit, invariantes dans le temps, sont déterminées conjointement par la résolution du système des équations d'harmonisation duale :
$\hat{U}_i = \hat{G} \cdot \hat{K}_i \cdot \hat{D}$ , i variant de 1 à N.

Il est à remarquer que de manière quelconque, non décrite en détail ici, on a la connaissance d'un certain nombre de mesures, complètement déterminés par trois vecteurs ou une matrice tridimensionnelle, ou partiellement déterminées sur nombre de coefficients matriciels strictement inférieur à 9, ainsi que des valeurs théoriques associées au stations de mesure correspondantes, elles aussi complètement ou partiellement connues.

Ainsi, on dispose pour chaque station de mesure ou visée Vi, de l'ensemble ou d'une partie des trois degrés de liberté de $\hat{K}_i$, et de l'ensemble ou d'une partie des trois degrés de liberté de $\hat{U}_i$.

Les mesures consistent nominalement en la matrice de rotation fournie par le sous-système DDP, donc contient trois degrés de liberté fournis. En pratique, le sous-système DDP peut ne fournir que deux, voire qu'un seul degré de liberté de la solution permet de résoudre quitte à augmenter le nombre de stations de mesures.

La méthode de redressement π utilisé par le procédé d'harmonisation globale selon l'invention permet, à condition de disposer d'un nombre suffisant de mesures, i.e. un nombre tel que d'un point de vue mathématique le rang du système d'équation soit suffisant, de déterminer les matrices de rotation inconnues G et $\hat{D}$.

Le procédé d'harmonisation duale au travers de la méthode de redressement utilisé repose sur trois outils mathématiques particuliers, désignées par O1, O2, O3 qui permettent seuls ou en combinaison de résoudre toutes les configurations de stations de mesures solubles.

Suivant le premier outil O1, lorsque une suite de matrices de rotation, désignés par $\{\hat{R}_i\}$, et une suite de vecteurs normés, désignés par $\{\vec{e}_i\}$, sont donnés tels que le produit $\hat{R}_i \cdot \vec{e}_i$ devrait être un vecteur constant, alors la meilleure valeur de ce vecteur constant $\vec{e}$ est donnée par :

$$\vec{e} = \frac{\Sigma_i\left(\hat{R}_i \cdot \vec{e}_i\right)}{\left\|\Sigma_i\left(\hat{R}_i \cdot \vec{e}_i\right)\right\|}$$

Pour pouvoir utiliser le premier outil O1, le nombre minimum requis de configurations de mesures permettant de résoudre le problème d'harmonisation est égal à 1 sous réserve que la contrainte mathématique :

$$\Sigma_i\left(\hat{R}_i \cdot \vec{e}_i\right) \neq \vec{0}.$$

est satisfaite.

Suivant le deuxième outil O2, lorsque deux suites de vecteurs $\{\vec{a}_i\}$ et $\{\vec{b}_i\}$ sont donnés telles que la seconde suite devrait être l'image de la première suite par l'application d'une rotation constante $\hat{R}$, alors la meilleure valeur de cette rotation constante est déterminée par l'équation :

$$\hat{R} = \pi\left(\sum_i \left(\vec{b}_i \cdot \vec{a}_i{}^T\right)\right)$$

dans lequel $(.)^T$ désigne l'opérateur de transposition.

Pour pouvoir utiliser le deuxième outil O2, le nombre minimum requis de configurations de mesures permettant de résoudre ce problème d'harmonisation est égal à 2 sous réserve que chacune des deux familles ou suites de vecteurs $\{\vec{a}_i\}$ et $\{\vec{b}_i\}$ est libre.

Suivant le troisième outil O3, lorsqu'une suite de matrices de rotation $\{\hat{R}_i\}$ qui devraient mathématiquement être égales à une rotation constante est donnée, alors la meilleure valeur de cette rotation est déterminée par l'équation :

$$\hat{R} = \pi\left(\sum_i \hat{R}_i\right)$$

Pour pouvoir utiliser le troisième outil O3, le nombre minimum requis de mesures permettant de résoudre le problème d'harmonisation est égal à 1, sous réserve que la contrainte mathématique suivant laquelle $\Sigma_i\hat{R}_i$ n'est pas la matrice nulle est satisfaite.

Suivant la Figure 3, et une configuration nominale formant une première configuration 102 procédé d'harmonisation, un nombre prédéterminé N de mesures $\hat{K}_i$ de matrices de rotations de DDP brute sont réalisées dans une première étape 104, chaque mesure $\hat{K}_i$ étant identifiée par l'indice de parcours « i » compris entre 1 et N,

Chaque mesure « i » correspond à une station de mesure différente dans laquelle un premier repère tridimensionnel 3D du dispositif de pointage ou du dispositif de visée correspondant par exemple à une mire est aligné sur un deuxième repère tridimensionnel 3D d'un objet externe fixe par rapport au repère fixe $R_{ref}$, prenant donc en compte les trois degrés de liberté. Par exemple, une posture connue ou prédéterminé du casque du pilote est prise par un moyen extérieur est prise par un moyen extérieur, par exemple un robot ou une caméra d'observation, couplée à une moyen de récupération de la sortie de rotation par rapport à un repère de référence, correspondant à un alignement d'une image tridimensionnelle 3D de positionnement connu dans le repère du viseur du casque sur un paysage réel externe prédéterminé de positionnement connu dans le repère fixe de référence $R_{ref}$.

Il est supposé ici que pour la série des N mesures identifiées par l'indice « i » variant de 1 à N, les matrices de rotation calculées $\hat{K}_i$, on connaît entièrement les matrices théoriques $\hat{U}_i$ correspondantes.

Dans ce cas et suivant le procédé d'harmonisation duale de l'invention, il convient de résoudre le système d'équations suivant :

$$\widehat{U}_i = \widehat{G} \cdot \widehat{K}_i \cdot \widehat{D}$$

avec i variant de 1 à N.

Dans une deuxième étape 106, le système d'équations décrit ci-dessus est réduit et résolu en mettant en œuvre un premier ensemble 112 de première, deuxième, troisième sous-étapes 114, 116, 118.

Dans une première sous-étape 114, on choisit une mesure "pivot", par exemple la première mesure correspondant à i égal à 1.

On peut alors vérifier que pour i = 2, $\cdots$ ,N on a : $\hat{U}_1{}^T \cdot \hat{U}_i = \hat{D}^T \cdot \hat{K}_1{}^T \cdot \hat{K}_i \cdot \hat{D}$.

Ainsi, en notant $\hat{U}_{1,i} = \hat{U}_1{}^T \cdot \hat{U}_i$ et $\hat{K}_{1,i} = \hat{K}_1{}^T \cdot \hat{K}_i$, on a : $D \cdot \hat{U}_{1,i} = \hat{K}_{1,i} \cdot \hat{D}$.

Dans la première sous-étape 114, pour i = 2, $\cdots$ , $N$ on calcule ainsi les matrices de rotations $\hat{U}_{1,i}$ et $\hat{K}_{1,i}$ à l'aide des équations : $\hat{U}_{1,i} = \hat{U}_1{}^T \cdot \hat{U}_i$ et $\hat{K}_{1,i} = \hat{K}_1{}^T \cdot \hat{K}_i$

Puis, dans une deuxième sous-étape 116, on termine la réduction la réduction du système d'équations : $\hat{U}_i = G \cdot \hat{K}_i \cdot D$ , i variant de 1 à N en utilisant le fait que ces dernières équations sont mathématiquement équivalentes à : $\hat{D} \cdot \vec{u}_i = \vec{k}_i$ , où les $\vec{u}_i$ et $\vec{k}_i$ sont respectivement les vecteurs unitaires principaux des rotations $\hat{U}_{1,i}$ et $\hat{K}_{1,i}$.

Ainsi, dans la deuxième sous-étape 116, on détermine de manière connue pour i = 2,$\cdots$ , $N$ , les vecteurs unitaires principaux des rotations $\hat{U}_{1,i}$ et $\hat{K}_{1,i}$, désignés respectivement par $\vec{u}_i$ et $\vec{k}_i$.

Ensuite dans une troisième sous-étape 118, on calcule la matrice droite D à l'aide de l'équation :

$$\widehat{D} = \pi\left(\sum_{i\geq 2}\left(\vec{k}_i \cdot \vec{u}_i{}^T\right)\right)$$

dans laquelle $\pi(.)$ désigne un un opérateur de redressement ou de projection qui transforme une matrice quelconque A en une matrice carré 3x3 de rotation $\pi(A)$ la plus proche au sens des moindres carrés sur l'ensemble des termes de la matrice $\pi(A)$ - A dans l'ensemble des matrices de rotation 3 x3.

Ensuite, dans une quatrième sous-étape 120, la matrice G de rotation à gauche G est déterminée à partir de la matrice $\hat{D}$ , calculée dans la troisième sous-étape 318, à l'aide de l'équation :

$$\widehat{G} = \pi\left(\sum_{i\geq 1}\left(\widehat{U}_i \cdot \widehat{D}^T \cdot \widehat{K}_i{}^T\right)\right)$$

Il est à remarquer que l'étude mathématique de la projection $\pi$ montre que le choix du pivot parmi les N mesures est sans influence sur le résultat final de l'harmonisation.

Il est à remarquer également que l'étude mathématique de la projection $\pi$ montre que le choix de déterminer d'abord $\hat{D}$ puis G est lui aussi sans influence ; on peut aussi commencer par éliminer $\hat{D}$ en faisant $\hat{U}_i \cdot \hat{U}_1{}^T = \hat{G} \cdot \hat{K}_i \cdot \hat{K}_1{}^T \cdot \hat{G}^T$ et résoudre de même.

Cette première configuration 102 qui peut corriger jusqu'à six degrés de liberté exige comme contraintes d'utilisation que le nombre minimum de mesures N est supérieure ou égal à 3, les axes des rotations $\hat{U}_i$ étant distincts pour au moins trois valeurs d'indice « i » différents.

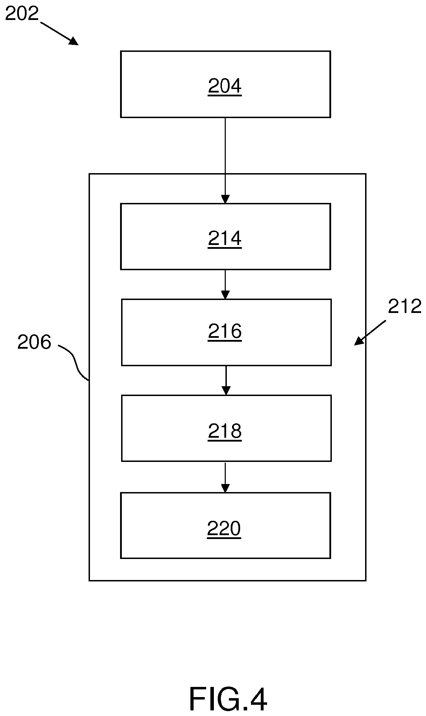

Suivant la Figure 4 et une deuxième configuration 202, dégradée par rapport à la configuration nominale 102, une première étape d'acquisition de mesures 204 est mise en œuvre. Cette première étape 204 reprend la même première étape 104 d'acquisition des N mesures de matrices de rotation calculés $\hat{K}_l$ avec des stations de mesures identiques de la configuration nominale mais en supposant ici que pour les matrices calculées $\hat{K}_l$, la valeur de gisement est inexacte ou non calculée, en tout cas inexploitable.

La traduction mathématique de cette mauvaise connaissance de la valeur de gisement est d'écrire dans la première étape que pour tout i, variant de 1 à N, la matrice $\hat{K}_i$ se décompose suivant la décomposition : $\hat{K}_i = \hat{\Psi}_i \cdot \hat{Q}_i$ , où

$\hat{\Psi}_i$ est une matrice de rotation inconnue de forme élémentaire en gisement :

$$\begin{pmatrix} \cos\psi i & -\sin\psi i & 0 \\ \sin\psi i & \cos\psi i & 0 \\ 0 & 0 & 1 \end{pmatrix} ;$$

et

$\hat{Q}_i$ est une matrice de rotation connue.

Ainsi, les équations générales de départ deviennent :

$\hat{U}_i = \hat{G} \cdot \hat{\Psi}_i \cdot \hat{Q}_i \cdot D$ pour i variant de 1 à N.

Dans une deuxième étape 206, le système d'équations décrit ci-dessus est réduit et résolu concernant la détermination de la matrice de biais droite $\hat{D}$ par la mise en œuvre d'un deuxième ensemble 212 des sous-étapes suivantes.

Dans une quatrième sous-étape 214, on crée une mesure pivot, par exemple la première mesure pivot correspondant à i égal à 1.

Pour i = 2, $\cdots$ , N , on vérifie que : $\hat{U}_1^T \cdot \hat{U}_i = \hat{D}^T \cdot \hat{Q}_1^T \cdot \hat{\Psi}_1^T \cdot \hat{\Psi}_i \cdot \hat{Q}_i \cdot \hat{D}$.

En notant pour i = 2,$\cdots$, N, $\hat{\Psi}_{1,i} = \hat{\Psi}_1^T \cdot \hat{\Psi}_i$, qui sont des matrices de rotation inconnues de forme élémentaire en gisement, et $\widehat{U}_{1,i} = \widehat{U}_1^T \cdot \widehat{U}_i$ on obtient le système d'équations :

$\hat{Q}_i \cdot \hat{D} \cdot \hat{U}_{1,i} \cdot \hat{D}^T \cdot \hat{Q}_i^T = \hat{\Psi}_{1,i}$, i variant de 2 à N.

Pour éliminer les matrices inconnues $\hat{\Psi}_{1,i}$, on utilise dans une deuxième sous-étape le fait que les dites matrices $\hat{\Psi}_{1,i}$, sont de forme élémentaire en gisement et qu'ainsi elles laissent toutes fixe le vecteur $\vec{k} = \begin{pmatrix} 0 \\ 0 \\ 1 \end{pmatrix}$ , i.e. vérifient les équations suivantes :

$$\begin{pmatrix} \cos\psi & -\sin\psi & 0 \\ \sin\psi & \cos\psi & 0 \\ 0 & 0 & 1 \end{pmatrix}\begin{pmatrix} 0 \\ 0 \\ 1 \end{pmatrix} = \begin{pmatrix} 0 \\ 0 \\ 1 \end{pmatrix},$$

i variant de 2 à N.

On a donc, pour tout i = 2, $\cdots$,N : $\hat{Q}_i \cdot \hat{D} \cdot \hat{U}_{1,i} \cdot \hat{D}^T \cdot Q_i^T \cdot \vec{k} = \vec{k}$, ce que l'on va écrire :

$$\widehat{U}_{1,i} \cdot \widehat{D}^T \cdot \widehat{Q}_i^T \cdot \vec{k} = \widehat{D}^T \cdot \widehat{Q}_1^T \cdot \vec{k} .$$

En notant $\vec{d} = \hat{D}^T \cdot \hat{Q}_1^T \cdot \vec{k}$, qui est donc un vecteur inconnu, et $\vec{q}_i = \hat{Q}_i^T \cdot \vec{k}$, qui eux sont des vecteurs connus, on a obtient le système d'équations suivant à résoudre :

$\hat{U}_{1,i} \cdot \hat{D}^T \cdot \vec{q}_i = \vec{d}$ pour tout i = 2, $\cdots$ ,*N*.

Dans la même quatrième sous-étape 214, pour i = 2, ..., N , on alcule les matrices $\hat{U}_{1,i}$ et les vecteurs $\vec{q}_i$ à l'aide des équations :

$$\widehat{U}_{1,i} = \widehat{U}_1^T \cdot \widehat{U}_i \text{ et } \vec{q}_i = \widehat{Q}_i^T \cdot \vec{k},$$

Puis dans des cinquième, sixième, et septième sous étapes 216, 218, 220, le système d'équations: $\vec{q}_i = \vec{d}$ pour tout i = 2,$\cdots$ ,*N*, est résolu en utilisant de manière itérative le premier outil O1 et le troisième outil O3.

Dans la cinquième sous-étape 216, on initialise une première suite de matrices $\{\hat{D}_{[s]}\}$, [s] désignant l'indice courant d'un terme $\hat{D}_{[s]}$ de la suite, en mettant $\hat{D}_{[0]}$ égal à $I_3$, $I_3$ désignant la matrice identité.

Puis, dans la sixième sous-étape itérative 218 faisant passer de l'itération [s] à [s+1] en calculant la valeur vectorielle $\vec{d}_{[s+1]}$, puis la valeur $\hat{D}_{[s+1]}$ de la première suite matricielle $\{\hat{D}_{[s]}\}$, à l'aide des relations de récurrence suivantes :

$$\vec{d}_{[s+1]} = \frac{\sum_{i \geq 2}\left(\widehat{U}_{1,i} \cdot \widehat{D}_{[s]}^{T} \cdot \vec{q}_i\right)}{\left\|\sum_{i \geq 2}\left(\widehat{U}_{1,i} \cdot \widehat{D}^{T} \cdot \vec{q}_i\right)\right\|}$$

$$\widehat{D}_{[s+1]} = \pi\left(\sum_{i \geq 2}\left(\vec{q}_i \cdot \vec{d}_{[s+1]}^{T} \cdot \widehat{U}_{1,i}\right)\right)$$

On calcule $\hat{D}$ comme une limite ou une limite approchée de la suite $\hat{D}_{[s]}$ qui est convergente.

Dans une septième sous-étape 220, le processus itératif effectué au travers de la sixième sous-étape 218 est arrêtée lorsque la limite $\hat{D}$ est approximée avec une précision suffisante définie par une valeur de seuil prédéterminée.

Puis, dans la deuxième étape 206, le système d'équations :
$\hat{Q}_1 \cdot \hat{D} \cdot \widehat{U}_{1,i} \cdot \widehat{D}^{T} \cdot \hat{Q}_i^{T} = \hat{\Psi}_{1,i}$, i variant de 1 à N, est réduit et résolu concernant la détermination de la matrice de biais gauche $G$ par la mise en œuvre d'un ensemble de sous-étapes analogue au deuxième ensemble 212 en créant un pivot par le droite.

Cette deuxième configuration 202 exige comme contraintes d'utilisation que le nombre minimum de mesures N est supérieure ou égal à 4, les axes des rotations $\widehat{U}_i$ étant distincts pour au moins trois valeurs d'indice « i » différents.

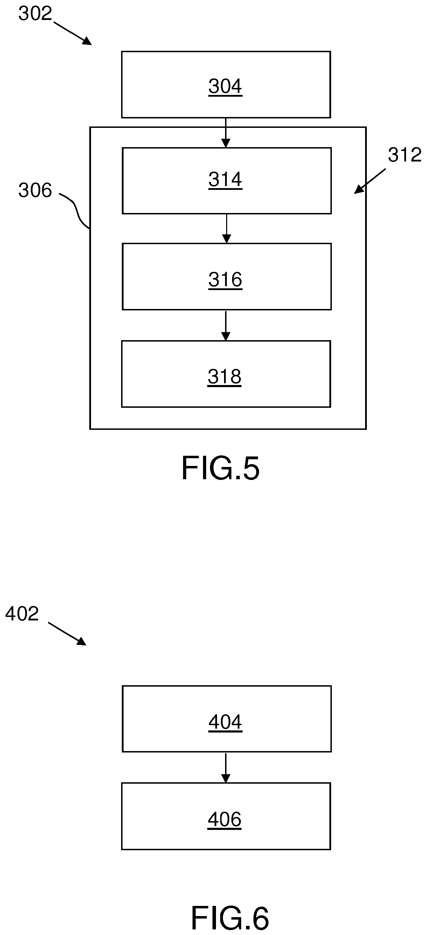

Suivant la Figure 5 et une troisième configuration 302, dégradée par rapport à la première configuration nominale 102, une première étape d'acquisition de mesures 304 est réalisée dans laquelle N mesures des matrices de rotation brutes $\widehat{K}_i$ sont effectuées par le sous-système de détection de posture DDP 16.

Ces mesures de matrices de rotation brutes $\widehat{K}_i$, i variant de 1 à N, correspondent à des visées dans lesquelles plusieurs directions $\vec{x}_i$ de visée différentes Vi du dispositif de visualisation $D_v$ servant de viseur sont alignés respectivement avec plusieurs directions $\vec{yl}$ différentes connues dans le repère extérieur de référence $R_{Ref}$ sans ajustement de roulis, c'est-à-dire sans effectuer de rotation de la tête autour de la ligne de visée.

Par exemple, le pilote vise avec différentes mires en forme de croix, affichés sur le viseur $D_v$ différentes directions prédéterminées et connues dans le repère extérieur de référence $R_{Ref}$ sans ajustement de roulis.

Dans cette première étape 304 de mesure, les N matrices de rotation $\widehat{K}_i$, mesurées et calculées par le sous-système de détection de posture 16, sont connues entièrement, i.e. dans toutes leurs composantes. On suppose également les deux familles de vecteurs normés ou directions $\{\vec{x}_i\}$ et $\{\vec{y}_i\}$ sont libres et permettent de ramener le système d'équations d'harmonisation duale général au système d'équations d'harmonisation duale particulier :
$\vec{y}_i = G \cdot \widehat{K}_i \cdot \hat{D} \cdot \vec{x}_i$, i variant de 1 à N.

Puis, dans une deuxième étape 306 le système d'équations d'harmonisation duale : $\vec{y}_i = G \cdot \widehat{K}_i \cdot \hat{D} \cdot \vec{x}_i$ pour i variant de 1 à N, est réduit et résolu de manière itérative en utilisant deux fois le deuxième outil O2 et en mettant en œuvre un troisième ensemble 312 de sous-étapes suivantes.

Dans une huitième sous-étape 314, on initialise une première suite de matrices gauches $\{\hat{G}_{[s]}\}$, [s] désignant le rang entier de parcours de cette première suite, en mettant $\hat{G}_{[0]}$ égal à $I_3$, $I_3$ désignant la matrice identité.

Puis on répète une neuvième sous-étape 316 itérative faisant passer de l'itération [s] à [s + 1], en calculant la valeur matricielle $\hat{D}_{[s+1]}$ puis la valeur matricielle $\hat{G}_{[s+1]}$ à l'aide des équations suivantes : :

$$\widehat{D}_{[s+1]} = \pi\left(\sum_{i \geq 1}\left(\widehat{K}_i^{T} \cdot \widehat{G}_{[s]}^{T} \cdot \vec{y}_i \cdot \vec{x}_i^{T}\right)\right)$$

$$\widehat{G}_{[s+1]} = \pi\left(\sum_{i \geq 1}\left(\vec{y}_i \cdot \vec{x}_i^{T} \cdot \widehat{D}_{[s+1]}^{T} \cdot \widehat{K}_i^{T}\right)\right)$$

la suite $\{\hat{D}_{[s]}\}$ désignant une deuxième suite de matrices droites.

Les suites $\hat{D}_{[s]}$ et $\hat{G}_{[s]}$ convergent respectivement vers D et G.

Dans une dixième sous-étape 318, on arrête le processus itératif exécuté au travers de la neuvième sous-étape 316 lorsque les limites D et G sont approximées avec une précision suffisante.

Cette troisième configuration exige comme contraintes d'utilisation que le nombre minimum de mesures N est supérieur ou égal à 4, les familles vectorielles $\{\vec{x_i}\}$ et $\{\vec{y_i}\}$ étant toutes deux libres.

Suivant la Figure 6 et une quatrième configuration 402, dégradée par rapport à la première configuration nominale 102, une première étape 404 d'acquisition de N mesures de matrices de rotation brutes $\hat{K_l}$ est exécutée.

Les N matrices de rotation brutes $\hat{K_l}$, mesurées par le sous-système de détection de posture correspondent à une pluralité de visées Vi plus contraintes que les visées effectuées avec la troisième configuration 302.

Les visées Vi de la quatrième configuration 402 correspondent à un alignement de N directions de visée $\vec{x_l}$ différentes du viseur $D_v$ sur une seule et même direction $\vec{y0}$ connue dans le repère extérieur de référence $R_{Ref}$ sans ajustement de roulis, c'est-à-dire sans effectuer de rotation de la tête autour de la ligne de visée. Par exemple, le pilote vise avec différentes mires en forme de croix du viseur une seule et même direction prédéterminée connue en repère extérieur de référence sans ajustement de roulis.

Dans cette quatrième configuration 402, on ne sait alors que calculer la matrice de rotation de biais droite $\hat{D}$ et la matrice de rotation de biais gauche $\hat{D}$ est supposée connue.

Dans cette première étape 404 de mesure, les N matrices de rotation $\hat{K_i}$, mesurées et calculées par le sous-système de détection de posture 16, sont connues entièrement, i.e. dans toutes leurs composantes. En supposant également que la famille de vecteurs normés ou directions du viseur $\{\vec{x_i}\}$ est libre, que le vecteur unitaire externe visé $\vec{y_0}$ est connu et que la matrice de rotation de biais gauche $G$ est connue, le système d'équations d'harmonisation duale général est ramené au système d'équations d'harmonisation duale particulier :
$\hat{G} \cdot \hat{K_i} \cdot \hat{D} \cdot \vec{x_i} = \vec{y_0}$ , i variant de 1 à N.

On ne cherche donc que la matrice de rotation de biais droite $\hat{D}$.

Puis, dans une deuxième étape 406 le système d'équations d'harmonisation duale : $\hat{G} \cdot \hat{K_i} \cdot \hat{D} \cdot \vec{x_i} = \vec{y_0}$ , pour i variant de 1 à N, est résolu en déterminant la matrice de rotation de biais droite $\hat{D}$ par l'équation suivante :
Puis dans une deuxième étape, le système d'équations décrit ci-dessus, i.e. $\vec{G}.\hat{K_i}\hat{D}.\vec{x_i} = \vec{y_0}$ pour i variant de 1 à N, est réduit et résolu, et la matrice droite $\hat{D}$ cherché est déterminée par l'équation :

$$\widehat{D} = \pi\left(\sum_{i \geq 1}\left(\widehat{K}_i^T \cdot \widehat{G}^T \cdot \vec{y}_0 \cdot \vec{x}_i^T\right)\right)$$

Cette quatrième configuration exige comme contraintes d'utilisation que le nombre minimum de mesures N est supérieur ou égal à 3 et que la famille vectorielle $\{\vec{x_i}\}$ est libre.

Il est à remarquer que par le procédé de visée de la quatrième configuration 402, il ne sera pas possible, connaissant $\hat{D}$, de calculer G. En effet, connaissant $\hat{G}$, il est aisé de montrer qu'un bon choix des libertés sur la famille $\{\vec{x_i}\}$ permet de rendre l'opérateur $\Sigma_{i \geq 1}(\hat{K}_i^T \cdot \hat{G}^T \cdot \vec{y}_0 \cdot \vec{x}_i^T)$ inversible, i.e. de rang 3, et donc de trouver $\hat{D}$ par son redressement. Par contre, si l'on suppose que l'on connaît $\hat{D}$, G doit nécessairement être le redressé de l'opérateur $\Sigma_{i \geq 1}(\vec{y}_0 \cdot \vec{x}_i^T \cdot \hat{D}^T \cdot \hat{K}_i^T)$ ; or cet opérateur est au mieux de rang 1, et donc insuffisant car son image est soit nulle, soit réduite à la droite portée par $\vec{y}_0$.

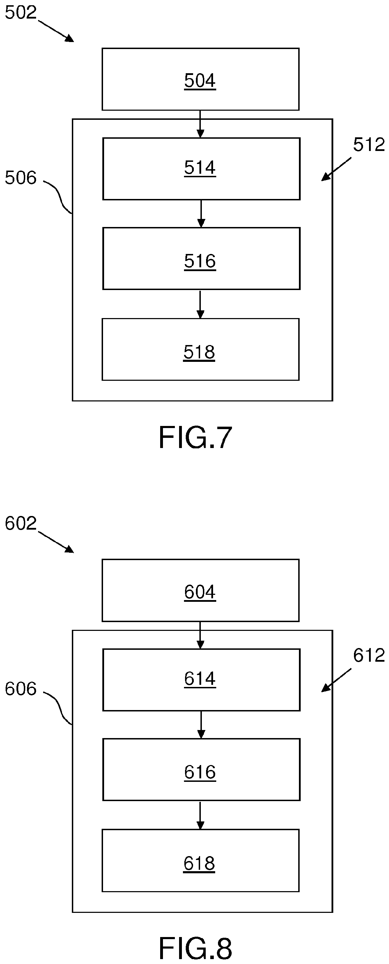

Suivant la Figure 7 et une cinquième configuration 502, dégradée par rapport à la première configuration nominale 504, une première étape d'acquisition de N mesures est réalisée dans laquelle N matrices de rotation $\hat{K_l}$ sont calculées par le dispositif de détection de posture.

Les N matrices de rotation $\hat{K_l}$ calculées correspondent à N stations de mesure ou visées Vi qui diffèrent de celles de la quatrième configuration 402 en ce que les coordonnées de la direction de visée extérieure $\vec{y}_0$ ne sont pas connues.

Les visées Vi de la cinquième configuration 502 correspondent à un alignement de N directions de visée $\vec{x_l}$ différentes du viseur $D_v$ sur une seule et même direction $\vec{y}_0$ extérieure dont on ne connait pas les coordonnées sans ajustement de roulis, c'est-à-dire sans effectuer de rotation de la tête autour de la ligne de visée. Par exemple, le pilote vise avec différentes mires en forme de croix du viseur une seule et même direction externe inconnue sans ajustement de roulis.

Dans cette cinquième configuration, on ne sait encore que calculer la matrice de rotation droite $\hat{D}$ mais on peut également calculer les coordonnées de la direction visée extérieure si on le souhaite.

Dans cette première étape 504 de mesure, les N matrices de rotation $\hat{K}_i$, mesurées et calculées par le sous-système de détection de posture 16, sont supposées connues entièrement, i.e. dans toutes leurs composantes. En supposant également que la famille de vecteurs normés ou directions du viseur $\{\vec{x}_i\}$ est libre, que le vecteur unitaire externe visé $\vec{y}_0$ est inconnu et que la matrice de rotation de biais gauche $G$ est connue, le système d'équations d'harmonisation duale général est ramené au système d'équations d'harmonisation duale particulier :

$\hat{G} \cdot \hat{K}_i \cdot \hat{D} \cdot \vec{x}_i = \vec{y}_0$ , i variant de 1 à N.

Seule la matrice de rotation droite $\hat{D}$ et si on le souhaite la direction visée extérieure, exprimée dans le repère externe de référence $R_{Ref}$ peuvent être déterminées.

Dans une deuxième étape 506, le système d'équations d'harmonisation duale : $\vec{G}.\hat{K}_i\hat{D}.\vec{x}_i = \vec{y}_0$ pour i variant de 1 à N, est résolu de manière itérative en mettant en œuvre un cinquième ensemble 512 de onzième, douzième, treizième sous-étapes 514, 516, 518 suivantes.

Dans la onzième sous-étape 514, on initialise une première suite de matrices droites $\{\hat{D}_{[s]}\}$, [s] désignant le rang entier de parcours de la suite $\{\hat{D}_{[s]}\}$, en mettant $\hat{D}_{[0]}$ égal à $I_3$, $I_3$ désignant la matrice identité.

Puis on répète la douzième sous-étape 516 itérative faisant passer de l'itération [s] à [s + 1] en calculant le vecteur $\vec{y}_{[s+1]}$ puis la matrice $\hat{D}_{[s+1]}$ à l'aide des équations suivantes :

$$\vec{y}_{[s+1]} = \frac{\sum_{i \geq 1}\left(\hat{G} \cdot \hat{K}_i \cdot \hat{D}_{[s]} \cdot \vec{x}_i\right)}{\left\|\sum_{i \geq 1}\left(\hat{G} \cdot \hat{K}_i \cdot \hat{D}_{[s]} \cdot \vec{x}_i\right)\right\|}$$

$$\hat{D}_{[s+1]} = \pi\left(\sum_{i \geq 1}\left(\hat{K}_i^T \cdot \hat{G}^T \cdot \vec{y}_{[s+1]} \cdot \vec{x}_i^T\right)\right)$$

la suite $\{\vec{y}_{[s]}\}$ désignant une deuxième suite de vecteurs de direction externe.

Les suites $\{\vec{y}_{[s]}\}$ et $\{\hat{D}_{[s]}\}$ convergent respectivement vers $\vec{y}_0$ et $\hat{D}$.

Dans la treizième étape 518, le processus itératif effectué au travers de la douzième étape 516 est arrêté lorsque les limites D et G sont approximées avec une précision suffisante, définie par une ou deux valeurs de seuil prédéterminées.

Cette cinquième configuration exige comme contraintes d'utilisation que le nombre minimum de mesures N est supérieur ou égal à 4, et que la famille vectorielle $\{\vec{x}_i\}$ est libre.

Suivant la Figure 8 et une sixième configuration 602, dégradée par rapport à la première configuration nominale 102, une première étape 604 d'acquisition de N mesures est réalisée dans laquelle N matrices de rotation $\hat{K}_l$ sont calculées par le dispositif de détection de posture 16.

Les N matrices de rotation $\hat{K}_l$ calculées correspondent ici à N visées Vi qui sont identiques à celles de la cinquième configuration 502 en ce que N alignements de directions de visée $\vec{x}_i$ sont effectués sur une seule et même direction $\vec{y}_0$ visée extérieure sans ajustement de roulis et en ce que la direction visée extérieure $\vec{y}_0$ est inconnue, mais qui diffèrent de celles de la cinquième configuration 502 en ce qu'ici la matrice de rotation de biais gauche est inconnue.

Dans cette sixième configuration 602, on ne sait que calculer la matrice de rotation droite $\hat{D}$ mais on ne peut plus calculer les coordonnées de la direction visée extérieure $\vec{y}_0$ inconnue.

Les N matrices de rotations $\hat{K}_i$, mesurées et calculées, sont supposées connues entièrement, i.e. dans toutes ses composantes. La famille de vecteurs normés ou directions du viseur $\{\vec{x}_i\}$ connus, le vecteur unitaire $\vec{y}_0$ inconnu de la direction externe visée sont liés dans le système d'équations d'harmonisation duale : $\vec{G}.\hat{K}_i\hat{D}.\vec{x}_i = \vec{y}_0$ pour tout i = 1 à N, la matrice G étant inconnue, et seule la matrice de rotation de biais droite $\hat{D}$ pouvant être déterminée.

En notant $\vec{z}_0 = \hat{G}^T \cdot \vec{y}_0$, pour i égal de 1 à N, les équations $\vec{G}.\hat{K}_i\hat{D}.\vec{x}_i = \vec{y}_0$ sont ramenées au système d'équations d'harmonisation duale :

$\hat{K}_i \cdot \hat{D} \cdot \vec{x}_i = \vec{z}_0$ , pour i égal de 1 à N.

Dans une deuxième étape 604, le système d'équations $\hat{K}_i \cdot \hat{D} \cdot \vec{x}_i = z_0$ pour i variant de 1 à N avec $\vec{z}_0 = \hat{G}^T \cdot \vec{y}_0$, est résolu de manière itérative en mettant en œuvre un sixième ensemble 612 de sous-étapes suivantes.

Dans une quatorzième étape 614, on initialise une première suite de matrices droites $\{\hat{D}_{[s]}\}$, [s] désignant le rang entier de parcours de la suite matricielle $\{\hat{D}_{[s]}\}$, en mettant $\hat{D}_{[0]}$ égal à $I_3$, $I_3$ désignant la matrice identité.

Puis on répète une quinzième sous-étape 616 itérative faisant passer de l'itération [s] à [s + 1] en calculant le

vecteur $\vec{z}_{[s+1]}$ puis la matrice $\hat{D}_{[s+1]}$ à l'aide des équations suivantes :

$$\vec{z}_{[s+1]} = \frac{\sum_{i \geq 1}\left(\widehat{K}_i \cdot \widehat{D}_{[s]} \cdot \vec{x}_i\right)}{\left\|\sum_{i \geq 1}\left(\widehat{K}_i \cdot \widehat{D}_{[s]} \cdot \vec{x}_i\right)\right\|}$$

$$\widehat{D}_{[s+1]} = \pi\left(\sum_{i \geq 1}\left(\widehat{K}_i^{\ T} \cdot \vec{z}_{[s+1]} \cdot \vec{x}_i^{\ T}\right)\right)$$

la suite $\{\vec{z}_{[s]}\}$ désignant une deuxième suite auxiliaire de vecteurs de direction externe et la suites $\{\hat{D}_{[s]}\}$ convergeant vers $\hat{D}$.

Puis, dans une seizième étape 616, le processus itératif effectué au travers de la quinzième sous-étape 614 est arrêté lorsque la limite $\hat{D}$ est approximée avec une précision suffisante définie par une valeur de seuil.

Cette sixième configuration 602 exige comme contraintes d'utilisation que le nombre minimum de mesures N est supérieur ou égal à 4 et que la famille vectorielle $\{\vec{x}_i\}$ soit libre.

A l'instar de la cinquième configuration 502, par ce procédé 602 de visée, il n'est pas possible de calculer G connaissant $\hat{D}$.

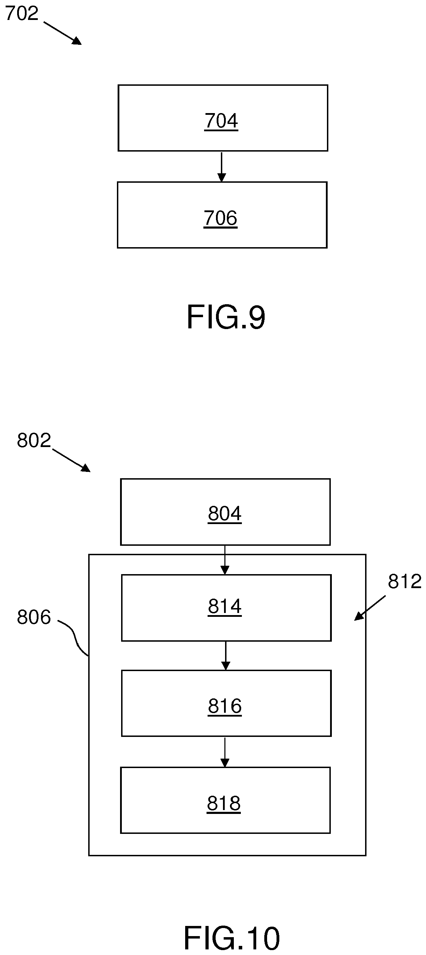

Suivant la Figure 9 et une septième configuration 702, dégradée par rapport à la première configuration nominale, une première étape 704 d'acquisition de N mesures est réalisée dans laquelle N matrices de rotation $\hat{K}_I$ de DDP brute sont calculées par le sous-système de détection de posture 16.

Les N matrices de rotation $\hat{K}_I$, mesurées et calculées, correspondent à N visées Vi, i variant de 1 à N, par lesquelles une seule et même direction de visée $\vec{x}_0$ sur le viseur est alignée sur plusieurs directions extérieures, visées ou ciblées ou pointées, sans prise en compte du roulis de la tête.

Par exemple, le pilote vise avec une unique mire cruciforme de position connue dans le repère $R_v$ dans le viseur, plusieurs directions extérieures $\vec{y}_I$, prédéterminées et dans le repère extérieur de référence $R_{Ref}$ sans ajustement de roulis, c'est-à-dire sans effectuer de rotation autour de la ligne de visée. On ne sait alors que calculer la matrice de rotation droite $\hat{D}$, la matrice de rotation gauche $G$ étant supposée connue.

Les N matrices de rotation mesurées $\hat{K}_i$, supposées connues entièrement, i.e. dans toutes leurs composantes, la famille des vecteurs normés $\{\vec{y}_i\}$ des directions extérieures visées supposée connu, et le vecteur unitaire $\vec{x}_0$ connu de la direction unique de visée sont reliés par le système d'équations d'harmonisation duale : $\hat{G} \cdot \hat{K}_i \cdot \hat{D} \cdot \vec{x}_0 = \vec{y}_i$ pour tout i = 1 à N dans lequel la matrice de rotation droite $\hat{D}$ est connue et la matrice gauche $G$ est cherchée.

Puis dans une deuxième étape 706, le système d'équations d'harmonisation duale : $G \cdot \hat{K}_i \cdot \hat{D} \cdot \vec{x}_0 = \vec{y}_i$ pour i variant de 1 à N, est résolu en déterminant la matrice de rotation gauche cherché $G$ à l'aide de l'équation :

$$\widehat{G} = \pi\left(\sum_{i \geq 1}\left(\vec{y}_i \cdot \vec{x}_0^{\ T} \cdot \widehat{D}^T \cdot \widehat{K}_i^{\ T}\right)\right)$$

Cette septième configuration 702 exige comme contraintes d'utilisation que le nombre minimum de mesures N est supérieur ou égal à 3 et que la famille vectorielle $\{\vec{y}_i\}$ est libre.

Suivant la Figure 10 et une huitième configuration 802, dégradée par rapport à la première configuration nominale 102, une première étape 804 d'acquisition de N mesures est réalisée dans laquelle N matrices de rotation $\hat{K}_I$ sont calculées par le dispositif de détection de posture.

Les N matrices de rotation $\hat{K}_I$, mesurées et calculées correspondent à N visées Vi, identiques à celles de la septième configuration 702 en ce que N alignements d'une seule et même direction de visée $\vec{x}_0$ sur le viseur est alignée sur plusieurs directions extérieures, visées ou ciblées ou pointées, connues sans prise en compte du roulis de la tête, et en ce que la matrice de rotation droite $\hat{D}$ est connue, mais différentes de celles de la septième configuration 702 en ce que la direction viseur $\vec{x}_0$ est inconnue.

Dans cette huitième configuration, on ne sait que calculer la matrice de rotation gauche $G$ mais on peut calculer également les coordonnées de la direction viseur unique $\vec{x}_0$ dans le repère viseur.

Les N matrices de rotation mesurées $\hat{K}_i$, supposées connues entièrement, i.e. dans toutes leurs composantes, la famille des vecteurs normés $\{\vec{y_i}\}$ des directions extérieures visées supposée connu, et le vecteur unitaire $\vec{x_0}$ inconnu de la direction unique de visée sont reliés par le système d'équations d'harmonisation duale : $\hat{G} \cdot \hat{K_i} \cdot \hat{D} \cdot \vec{x_0} = \vec{y_i}$ pour tout i = 1 à N dans lequel la matrice de rotation droite $\hat{D}$ est connue, la matrice gauche G et éventuellement la direction de visée viseur sont cherchées.

Dans cette huitième configuration 802, on ne sait que calculer la matrice de rotation gauche $G$ mais on peut calculer également les coordonnées de la direction viseur unique $\vec{x_0}$ dans le repère viseur.

Ensuite, dans une deuxième étape 806 le système d'équations d'harmonisation duale : $G \cdot \hat{K_i} \cdot \hat{D} \cdot \vec{x_0} = \vec{y_i}$ pour i variant de 1 à N, est résolu de manière itérative en mettant en œuvre un huitième ensemble de sous-étapes suivantes.

Dans une dix-septième sous-étape 814, une première suite de matrices gauche $\{\hat{G}_{[s]}\}$, [s] désignant le rang entier de parcours de la suite $\{\hat{G}_{[s]}\}$, est initialisée en mettant $\hat{G}_{[0]}$ égal à $I_3$, $I_3$ désignant la matrice identité.

Puis on répète une dix-huitième sous-étape itérative 816 faisant passer de l'itération [s] à [s + 1] en calculant le vecteur $\vec{x}_{[s+1]}$ puis la matrice $\hat{G}_{[s+1]}$ à l'aide des équations suivantes :

$$\vec{x}_{[s+1]} = \frac{\sum_{i \geq 1} \left( \hat{D}^T \cdot \hat{K_i}^T \cdot \hat{G}_{[s]}^T \cdot \vec{y_i} \right)}{\left\| \sum_{i \geq 1} \left( \hat{D}^T \cdot \hat{K_i}^T \cdot \hat{G}_{[s]}^T \cdot \vec{y_i} \right) \right\|}$$

$$\hat{G}_{[s+1]} = \pi \left( \sum_{i \geq 1} \left( \vec{y_i} \cdot \vec{x}_{[s+1]}^T \cdot \hat{D}^T \cdot \hat{K_i}^T \right) \right)$$

la suite $\{\vec{x}_{[s]}\}$ désignant une deuxième suite de vecteurs de direction viseur.

Les suites $\hat{G}_{[s]}$ et $\vec{x}_{[s]}$ convergent alors respectivement vers G et $\vec{x_0}$.

Dans une dix-neuvième sous-étape 818, le processus itératif effectué au travers de la dix-septième sous-étape 816 est arrêté lorsque les limites G et éventuellement $\vec{x_0}$ sont approximées avec une précision suffisante définie par une ou deux valeurs de seuil prédéterminées.

Cette huitième configuration 802 exige comme contraintes d'utilisation que le nombre minimum de mesures N est supérieur ou égal à 4 et que la famille vectorielle $\{\vec{y_i}\}$ est libre.

Il est à remarquer que la méthode de résolution décrite pour les sept configurations dégradées ci-dessus se généralise à tous les autres configurations du même type.

Il est remarquer que l'invention permet également de déterminer un écart relatif harmonisé entre les sorties fournies par deux systèmes de détection de posture DDP solidaires l'un de l'autre.

Le premier système de détection DDP fournissant la rotation $\hat{R}(R_{v1}/ R_{ref1})$ entre un premier repère viseur $R_{v1}$ et un premier repère extérieure fixe $R_{ref1}$, et le deuxième système de détection de posture fournissant la rotation harmonisé $\hat{R}(R_{v2}/R_{ref2})$ entre un deuxième repère viseur $R_{v2}$ et un deuxième repère extérieur fixe $R_{ref2}$, le procédé selon l'invention permet de calculer la matrice de rotation $\hat{R}(R_{v2}/R_{v1})$ entre le premier repère viseur $R_{v1}$ et le deuxième repère viseur $R_{v2}$ comme une matrice gauche, et la matrice de rotation $\hat{R}(R_{ref2}/R_{ref1})$ entre le premier repère extérieur fixe $R_{ref1}$ et le deuxième repère fixe $R_{ref2}$ comme une matrice droite.

En effet mathématiquement le problème est équivalent au précédent, puisqu'on peut écrire :

$$\hat{R}(R_{v2}/R_{ref2}) = \hat{R}(R_{ref2}/R_{ref1})^T \cdot \hat{R}(R_{v1}/R_{ref1}) \cdot \hat{R}(R_{v2}/R_{v1}),$$

et que l'on cherche alors G = $\hat{R}(R_{ref2}/R_{ref1})^T$ et $\hat{D}$ = $\hat{R}(R_{v2}/R_{v1})$.

De même ; dans le cas où l'on cherche à déterminer l'écart relatif entre deux systèmes de DDP solidaires, les mesures fournies par chacune des DDP n'ont pas besoin d'être complètes.

Concernant le procédé algorithmique d'harmonisation globale de la DDP et ses variantes décrites ci-dessus, les caractéristiques essentielles sont :

- • - le caractère universel et générique de la méthode de redressement $\pi$ utilisé qui permet de traiter tous les cas résolubles de manière matricielle, sans jamais faire appel à des fonctions mathématiques élaborées, en particulier les fonctions de trigonométrie ;
- • - la souplesse d'utilisation du redressement $\pi$ qui par essence permet des réductions des problèmes indépendantes de l'ordre des éléments à traiter, et donc permet une grande souplesse de traitements.

Concernant l'harmonisation globale d'une détection de posture mise en œuvre par un système de détection de posture ou la caractérisation d'un écart entre les détections de posture fournies par deux systèmes de détection de posture utilisant ce procédé algorithmique d'harmonisation selon l'invention, les caractéristiques essentielles sont :

- le fait de pouvoir harmoniser totalement le système et le procédé de détection de posture DDP sans avoir besoin de faire des harmonisations partielles de chaque élément, qui à chaque fois nécessitent la connaissance exacte de la posture de l'autre élément, et qui dans les faits transfèrent des erreurs résiduelles ;
- le fait de pouvoir harmoniser totalement le système et le procédé de détection de posture DDP sans savoir a priori quel(s) élément(s) est(sont) mal aligné(s) ;
- le fait de pouvoir harmoniser le système et le procédé de détection de posture sans que les mesures ou les données attendues soient intégralement connues.

De manière générale, le système de visualisation en tête haute 2, décrit ci-dessus et configuré pour mettre en œuvre le procédé d'harmonisation duale selon l'invention, est embarqué bord d'un véhicule porteur compris dans l'ensemble des aéronefs, des avions, des hélicoptères, des automobiles et des robots.

## Revendications

1. Procédé d'harmonisation duale d'un sous-système de détection de posture DDP, intégré dans un système de visualisation tête haute porté,
   le système de visualisation tête haute porté (2) étant embarqué dans un véhicule porteur et comprenant :

   . - un dispositif de visualisation (12)$D_v$tête haute porté transparent,
   . un dispositif de référence extérieur (14) $D_{ref}$ , ayant un repère de référence extérieur $R_{ref}$ , pouvant être soit un repère du véhicule porteur, soit un repère géographique local, soit un repère terrestre ;
   . - un sous-système (16) de détection de posture DDP, ayant :

   un premier élément solide de poursuite (18) S1, attaché solidairement au dispositif de visualisation 12 $D_v$ ;
   un deuxième élément solide fixe (20) S2, lié solidairement au dispositif de référence (14)$D_{ref}$ , et
   un moyen (26) de mesure et de détermination de l'orientation relative$\hat{K}$du premier élément mobile de poursuite (18) S1 par rapport au deuxième élément fixe (22) S2,

   . - un sous-système d'harmonisation duale (32) pour harmoniser le système de visualisation tête haute porté (2) et le sous-système de détection de posture DDP (16),

   le procédé d'harmonisation duale comprend les étapes consistant à

   . - dans une première étape (54 ; 104, 204 ; 304 ; 404 ; 504 ; 604 ; 704 ; 804), effectuer une série d'un nombre prédéterminé N de mesures d'orientations relatives $\hat{K}_i$, i variant de 1 à N, du premier élément mobile de poursuite (18) S1 par rapport au deuxième élément fixe (22) S2 du sous-système de détection de posture DDP (16), correspondant à des visées Vi différentes, i variant de 1 à N, dans lesquels un ou plusieurs éléments différents prédéterminé d'informations de pilotage affichés dans le dispositif de visualisation (12) $D_v$ sont superposés ou alignés avec un ou plusieurs amers correspondants du monde réel extérieur dont les matrices de rotation théoriques $\hat{U}_i$ dans le repère de référence extérieur sont connus ; puis
   . - dans une deuxième étape (56 ; 106 ; 206 ; 306 ; 406 ; 506 ; 606 ; 706 ; 806) et en utilisant un algorithme d'harmonisation duale, calculer conjointement la matrice d'orientation relative $\hat{R}(S1/v)$du premier élément de poursuite (18) S1 du sous-système de détection de posture (16) vers le dispositif de visualisation $D_v$et/ou la matrice d'orientation relative $\hat{R}(ref/S2)$ du dispositif de référence externe $D_{Ref}$ vers deuxième élément solide fixe (20) S2 du sous-système de détection de posture (16), respectivement comme la matrice de rotation de biais à droite $\hat{D}$ et la matrice de rotation de biais à gauche $\hat{G}$ solutions conjointes du système d'équations d'harmonisation duale : $\hat{U}_i = \hat{G} \cdot \hat{K}_i \cdot \hat{D}$, i variant de 1 à N **caractérisé en ce que** le minimum du nombre de mesures N requis dépend du nombre L de degrés de liberté angulaire erronés ou inexploitables des matrices de rotation $\hat{R}(S1/v)$ et $\hat{R}(ref/S2)$du système de visualisation en tête haute, ledit nombre L étant un entier supérieur ou égal à 1 et inférieur ou égal à 6, et la résolution du système d'équations $\hat{U}_i = \hat{G} \cdot \hat{K}_i \cdot \hat{D}$ , i variant de 1 à N, utilise un opérateur de redressement $\pi(.)$ qui transforme une matrice quelconque A en une matrice carré 3x3

de rotation $\pi(A)$ la plus proche au sens des moindres carrés sur l'ensemble des termes de la matrice $\pi(A) - A$ sur l'ensemble des matrice de rotation 3 x3, pour déterminer la rotation à droite $\hat{D}$ et la rotation à gauche $\hat{G}$.

2. Procédé d'harmonisation duale d'un sous-système de détection de posture DDP, intégré dans un système de visualisation tête haute porté, selon la revendication 1, dans lequel et suivant une première configuration(102),

le nombre de degrés de liberté angulaire erronés ou inexploitables de la matrice de rotation de biais à droite $\hat{D}$, est égal à trois et le nombre de degrés de liberté angulaire erronés ou inexploitables de la matrice de rotation de biais à gauche $\hat{G}$ est égal à trois,

la première étape (104) effectue un nombre N supérieur ou égal à 3, de mesures pour lesquelles les visées Vi correspondent à un alignement de repères tridimensionnels affichés sur des repères tridimensionnels extérieurs observés, et

la deuxième étape (106) de résolution du système d'équations d'harmonisation duale comprend un premier ensemble (112) de sous étapes consistant à :

. - dans une première sous-étape (114), choisir une mesure "pivot" comme étant la première mesure parmi les N mesures et correspondant à i égal à 1, et pour i = 2, ..., N on calcule les matrices de rotations $\hat{U}_{1,i}$ et $\hat{K}_{1,i}$ à l'aide des équations : $\hat{U}_{1,i} = \hat{U}_1^T \cdot \hat{U}_i$ et $\hat{K}_{1,i} = \hat{K}_1^T \cdot \hat{K}_i$ ; puis

. - dans une deuxième sous-étape (116), déterminer pour $i = 2, \cdots, N$ , les vecteurs unitaires principaux des rotations $\hat{U}_{1,i}$ et $\hat{K}_{1,i}$, désignés respectivement par $\vec{u}_i$ et $\vec{k}_i$ ; ensuite

. - dans une troisième sous-étape (118), calculer la matrice droite $\hat{D}$ à l'aide de l'équation :

$$\widehat{D} = \pi\left(\sum_{i \geq 2}\left(\vec{k}_i \cdot \vec{u}_i^{\;T}\right)\right)$$

ensuite

. - dans une quatrième sous-étape (120), déterminer la matrice de rotation à gauche $\hat{G}$ à partir de la matrice $\hat{D}$ calculée dans la troisième sous-étape (318), à l'aide de l'équation :

$$\widehat{G} = \pi\left(\sum_{i \geq 1}\left(\widehat{U}_i \cdot \widehat{D}^T \cdot \widehat{K}_i^{\;T}\right)\right)$$

3. Procédé d'harmonisation duale d'un sous-système de détection de posture DDP, intégré dans un système de visualisation tête haute porté, selon la revendication 1, dans lequel et suivant une deuxième configuration(202),

le nombre de degrés de liberté angulaire erronés ou inexploitables de la matrice de rotation de biais à droite $D$, est égal à trois et le seul degré de liberté angulaire erroné ou inexploitable de la matrice de rotation de biais à gauche $\hat{G}$ , est l'angle de gisement, étant supposé que les angles de site et de roulis sont connus avec une précision suffisante ; et

la première étape (204) effectue un nombre N supérieur ou égal à 4, de mesures pour lesquelles les visées Vi correspondent à un alignement de repères tridimensionnels affichés sur des repères tridimensionnels observés, et

la deuxième étape (206) de résolution du système d'équations d'harmonisation duale comprend un deuxième ensemble (212) de sous étapes consistant à

. - dans une quatrième sous-étape (214), pour i = 2, ..., N , calculer les matrices $\hat{U}_{1,i}$ et les vecteurs $\vec{q}_i$ à l'aide des équations :

$\hat{U}_1^T = \hat{U}_1^T \cdot \hat{U}_i$ et $\vec{q}_i = \hat{Q}_i^T \cdot \vec{k}$,

le vecteur $\vec{k}$ étant défini par l'équation $\vec{k} = \begin{pmatrix} 0 \\ 0 \\ 1 \end{pmatrix}$ ; puis

. - dans une cinquième sous-étape (216) d'initialisation, initialiser une première suite de matrices $\{\hat{D}_{[s]}\}$, [s] désignant le rang entier courant de parcours de la suite $\{\hat{D}_{[s]}\}$, en mettant $\hat{D}_{[0]}$égale à $I_3$ , $I_3$ désignant la matrice identité ; ensuite

. - répéter une sixième sous-étape itérative (218) faisant passer de l'itération [s] à [s+1] en calculant la valeur vectorielle $\vec{d}_{[s+1]}$ , puis la valeur $\hat{D}_{[s+1]}$ de la première suite matricielle $\{\hat{D}_{[s]}\}$, à l'aide des équations suivantes :

$$\vec{d}_{[s+1]} = \frac{\sum_{i\geq2}(\hat{U}_{1,i} \cdot \hat{D}_{[s]}^T \cdot \vec{q}_i)}{\left\|\sum_{i\geq2}(\hat{U}_{1,i} \cdot \hat{D}^T \cdot \vec{q}_i)\right\|}$$

$$\hat{D}_{[s+1]} = \pi\left(\sum_{i\geq2}(\vec{q}_i \cdot \vec{d}_{[s+1]}^T \cdot \hat{U}_{1,i})\right)$$

la suite $\overrightarrow{\{d_{[s]}\}}$ désignant une deuxième suite auxiliaire de vecteurs et la suite $\{\hat{D}_{[s]}\}$ convergeant vers $D$ ; et

. - arrêter dans une septième sous-étape (220) le processus itératif effectué au travers de la sixième sous-étape (218) lorsque la limite $\hat{D}$est approximée avec une précision suffisante définie par une valeur de seuil prédéterminée.

4. Procédé d'harmonisation duale d'un sous-système de détection de posture DDP, intégré dans un système de visualisation tête haute porté, selon la revendication 1, dans lequel et suivant une troisième configuration(302),

le nombre de degrés de liberté angulaire erronés ou inexploitables de la matrice de rotation de biais à droite *D,* est égal à trois et le nombre de degrés de liberté angulaire erronés ou inexploitables de la matrice de rotation de biais à gauche $\hat{G}$ est égal à trois, et

la première étape (304) effectue un nombre N supérieur ou égal à 4, de mesures pour lesquelles les visées Vi correspondent à un alignement de plusieurs directions de visée $\vec{x}_i$ différentes sur plusieurs directions extérieures visées $\vec{y}_i$, connues dans le repère extérieur de référence $R_{Ref}$sans ajustement de roulis, les familles vectorielles $\{\vec{x}_i\}$ et $\{\vec{y}_i\}$étant toutes deux libres ; et

la deuxième étape (306) de résolution du système d'équations d'harmonisation duale :$\vec{y}_i = \hat{G} \cdot \hat{K}_i \cdot \hat{D} \cdot \vec{x}_i$ pour i variant de 1 à N comprend un troisième ensemble (312) de sous-étapes suivantes consistant à :

. - dans une huitième sous-étape (314) d'initialisation, initialiser une première suite de matrices gauches $\widehat{\{G_{[s]}\}}$ , [s] désignant le rang entier de parcours de cette première suite, en mettant $\hat{G}_{[0]}$ égal à $I_3$ , $I_3$ désignant la matrice identité ; puis

. - répéter une neuvième sous-étape (316) itérative faisant passer de l'itération [s] à [s + 1], en calculant la matrice $\hat{D}_{[s+1]}$ puis la matrice $\hat{G}_{[s+1]}$ à l'aide des équations suivantes :

$$\hat{D}_{[s+1]} = \pi\left(\sum_{i\geq1}\left(\hat{K}_i^T \cdot \hat{G}_{[s]}^T \cdot \vec{y}_i \cdot \vec{x}_i^T\right)\right)$$

$$\hat{G}_{[s+1]} = \pi\left(\sum_{i>1}\left(\vec{y}_i \cdot \vec{x}_i^T \cdot \hat{D}_{[s+1]}^T \cdot \hat{K}_i^T\right)\right)$$

la suite $\{\hat{D}_{[s]}\}$ désignant une deuxième suite de matrices droites, et les suites $\hat{D}_{[s]}$ et $\hat{G}_{[s]}$ convergeant respectivement vers $\hat{D}$ et $\hat{G}$ ; et

. - arrêter dans une dixième sous-étape d'arrêt (318), le processus itératif exécuté au travers de la neuvième sous-étape (316) lorsque les limites $\hat{D}$ et $\hat{G}$sont approximées avec une précision suffisante.

**5.** Procédé d'harmonisation duale d'un sous-système de détection de posture DDP, intégré dans un système de visualisation tête haute porté, selon la revendication 1, dans lequel et suivant une quatrième configuration (402),

le nombre de degrés de liberté angulaire erronés ou inexploitables de la matrice de rotation de biais à droite $\hat{D}$, est égal à trois et la matrice de rotation de biais à gauche $\hat{G}$ est supposée connue ; et

la première étape (404) effectue un nombre N supérieur ou égal à 3, de mesures pour lesquelles les visées Vi correspondent à un alignement de N directions de visée $\vec{x}_i$ différentes sur une seule et même direction extérieure visée $\vec{y}_0$, connue dans le repère extérieur de référence $R_{Ref}$ sans ajustement de roulis, la famille vectorielle $\{\vec{x}_i\}$ étant libre ; et

la deuxième étape (406) de résolution du système d'équations d'harmonisation duale : $\hat{G} \cdot \hat{K}_i \cdot \hat{D} \cdot \vec{x}_i = \vec{y}_0$ pour i variant de 1 à N détermine la matrice de rotation de biais droite $\hat{D}$ par l'équation suivante :

$$\widehat{D} = \pi\left(\sum_{i \geq 1}\left(\widehat{K}_i^T \cdot \widehat{G}^T \cdot \vec{y}_0 \cdot \vec{x}_i^T\right)\right)$$

**6.** Procédé d'harmonisation duale d'un sous-système de détection de posture DDP, intégré dans un système de visualisation tête haute porté, selon la revendication 1, dans lequel et suivant une cinquième configuration (502),

le nombre de degrés de liberté angulaire erronés ou inexploitables de la matrice de rotation de biais à droite $\hat{D}$ est égal à trois et la matrice de rotation de biais à gauche $\hat{G}$ est supposée connue ; et

la première étape (504) effectue un nombre N supérieur ou égal à 4, de mesures pour lesquelles les visées Vi correspondent à un alignement de N directions de visée $\vec{x}_i$ différentes sur une seule et même direction extérieure visée $\vec{y}_0$ inconnue sans ajustement de roulis, la famille vectorielle $\{\vec{x}_i\}$ étant libre, et

la deuxième étape (506) de résolution du système d'équations d'harmonisation duale : $\hat{G} \cdot \hat{K}_i \cdot \hat{D} \cdot \vec{x}_i = \vec{y}_0$ pour i variant de 1 à N comprend un cinquième ensemble (512) de sous-étapes consistant à :

. - dans une onzième sous-étape (514) d'initialisation, initialiser une première suite de matrices droites $\{\hat{D}_{[s]}\}$, [s] désignant le rang entier de parcours de la suite $\{\hat{D}_{[s]}\}$, $\{\hat{D}_{[s]}\}$, en mettant $\hat{D}_{[0]}$ égal à $I_3$, $I_3$ désignant la matrice identité ; puis

. - répéter une douzième sous-étape itérative (516) faisant passer de l'itération [s] à [s + 1] en calculant le vecteur $\vec{y}_{[s+1]}$ puis la matrice $\hat{D}_{[s+1]}$ à l'aide des équations suivantes :

$$\vec{y}_{[s+1]} = \frac{\sum_{i \geq 1}\left(\widehat{G} \cdot \widehat{K}_i \cdot \widehat{D}_{[s]} \cdot \vec{x}_i\right)}{\left\|\sum_{i \geq 1}\left(\widehat{G} \cdot \widehat{K}_i \cdot \widehat{D}_{[s]} \cdot \vec{x}_i\right)\right\|}$$

$$\widehat{D}_{[s+1]} = \pi\left(\sum_{i \geq 1}\left(\widehat{K}_i^T \cdot \widehat{G}^T \cdot \vec{y}_{[s+1]} \cdot \vec{x}_i^T\right)\right)$$

la suite $\{\vec{y}_{[s]}\}$ désignant une deuxième suite de vecteurs de direction externe, et les suites $\{\vec{y}_{[s]}\}$ et $\{\hat{D}_{[s]}\}$ convergeant respectivement vers $\vec{y}_0$ et $\hat{D}$ ; et

. - arrêter dans une treizième sous-étape d'arrêt (518) le processus itératif effectué au travers de la douzième sous-étape (516) lorsque les limites $\hat{D}$ et $\hat{G}$ sont approximées avec une précision suffisante définie par une ou deux valeurs seuil prédéterminées.

**7.** Procédé d'harmonisation duale d'un sous-système de détection de posture DDP, intégré dans un système de visualisation tête haute porté, selon la revendication 1, dans lequel et suivant une sixième configuration (602),

. - le nombre de degrés de liberté angulaire erronés ou inexploitables de la matrice de rotation de biais à droite $\hat{D}$ est égal à trois, et la matrice de rotation de biais à gauche $\hat{G}$ est inconnue et indéterminable ; et

. - la première étape (604) effectue un nombre N supérieur ou égal à 4, de mesures pour lesquelles les visées Vi correspondent à un alignement de N directions de visée $\vec{x}_i$ différentes sur une seule et même direction extérieure visée $\vec{y}_0$ inconnue sans ajustement de roulis, la famille vectorielle $\{\vec{x}_i\}$ étant libre, et ramène la résolution du système d'équations d'harmonisation duale: $\hat{G} \cdot \hat{K}_i \cdot \hat{D} \cdot \vec{x}_i = \vec{y}_0$ pour i variant de 1 à N, à la résolution du système réduit d'équations d'harmonisation duale :

$\hat{K}_i \cdot \hat{D} \cdot \vec{x}_i = \vec{z}_0$ pour i variant de 1 à 4, en notant $\vec{z}_0 = \hat{G}^T \cdot \vec{y}_0,$ ; et

. - la deuxième étape (608) de résolution du système réduit d'équations d'harmonisation duale comprend un sixième ensemble (612) de sous-étapes consistant à :

. - dans une quatorzième sous-étape (614) d'initialisation, initialiser une première suite de matrices droites $\{\hat{D}_{[s]}\}$ ,[s] désignant le rang entier de parcours de la suite $\{\hat{D}_{[s]}\}$, en mettant $\hat{D}_{[0]}$ égal à $I_3$ , $I_3$ désignant la matrice identité ; puis

. - répéter une quinzième sous-étape itérative (616) faisant passer de l'itération [s] à [s + 1] en calculant le vecteur $\vec{z}_{[s+1]}$ , puis la matrice $\hat{D}_{[s+1]}$ de la première suite matricielle à l'aide des équations suivantes :

$$\vec{z}_{[s+1]} = \frac{\sum_{i \geq 1}(\hat{K}_i \cdot \hat{D}_{[s]} \cdot \vec{x}_i)}{\left\| \sum_{i \geq 1}(\hat{K}_i \cdot \hat{D}_{[s]} \cdot \vec{x}_i) \right\|}$$

$$\hat{D}_{[s+1]} = \pi \left( \sum_{i \geq 1} \left( \hat{K}_i^{\ T} \cdot \vec{z}_{[s+1]} \cdot \vec{x}_i^{\ T} \right) \right)$$

la suite $\{\vec{z}_{[s]}\}$ désignant une deuxième suite auxiliaire de vecteurs et la suite $\{\hat{D}_{[s]}\}$ convergeant $\hat{D}$ ; et

. - arrêter dans une seizième sous-étape d'arrêt (618) le processus itératif effectué au travers de la quinzième sous-étape (616) lorsque la limite $\hat{D}$ est approximée avec une précision suffisante définie par une valeur de seuil prédéterminée.

**8.** Procédé d'harmonisation duale d'un sous-système de détection de posture DDP, intégré dans un système de visualisation tête haute porté, selon la revendication 1, dans lequel et suivant une septième configuration (702),

le nombre de degrés de liberté angulaire erronés ou inexploitables de la matrice de rotation de biais à gauche $\hat{G}$ est égal à trois et la matrice de rotation de biais à droite $\hat{D}$ est supposée connue ; et

la première étape (704) effectue un nombre N supérieur ou égal à 3, de mesures pour lesquelles les visées Vi correspondent à un alignement d'une seule et même direction de visée $\vec{x}_0$ connue sur N directions extérieures visées $\vec{y}_i$ connues sans ajustement de roulis, la famille vectorielle $\{\vec{y}_i\}$ étant libre, et

la deuxième étape (706) de résolution du système d'équations d'harmonisation duale : $\hat{G} \cdot \hat{K}_i \cdot \hat{D} \cdot \vec{x}_0 = \vec{y}_i$ , pour i variant de 1 à N, détermine la matrice de rotation gauche cherchée $\hat{G}$ à l'aide de l'équation :

$$\hat{G} = \pi \left( \sum_{i \geq 1} \left( \vec{y}_i \cdot \vec{x}_0^{\ T} \cdot \hat{D}^T \cdot \hat{K}_i^{\ T} \right) \right)$$

**9.** Procédé d'harmonisation duale d'un sous-système de détection de posture DDP, intégré dans un système de visualisation tête haute porté, selon la revendication 1, dans lequel et suivant une huitième configuration (802),

. - le nombre de degrés de liberté angulaire erronés ou inexploitables de la matrice de rotation de biais à gauche $\hat{G}$ est égal à trois et la matrice de rotation de biais à droite $\hat{D}$ est supposée connue ; et

. - la première étape (804) effectue un nombre N supérieur ou égal à 4, de mesures pour lesquelles les visées Vi correspondent à un alignement d'une seule et même direction de visée $\vec{x}_0$ inconnue sur N directions extérieures visées $\vec{y}_i$ connues sans ajustement de roulis, la famille vectorielle $\{\vec{y}_i\}$ étant libre, et

. - la deuxième étape (806) de résolution du système d'équations d'harmonisation duale : $\hat{G} \cdot \hat{K}_i \cdot \hat{D} \cdot \vec{x}_0 = \vec{y}_i$ , pour i variant de 1 à N, comprend un huitième ensemble (812) de sous-étapes consistant à :

. - dans une dix-septième sous-étape (814), initialiser une première suite de matrices gauche $\{\hat{G}_{[s]}\}$, [s] désignant le rang entier de parcours de la suite $\{\hat{G}_{[s]}\}$, est initialisée en mettant $\hat{G}_{[0]}$ égal à $I_3$ , $I_3$ désignant la matrice

identité ; puis

. - répéter une dix-huitième sous-étape itérative (816) faisant passer de l'itération [s] à [s + 1] en calculant le vecteur $\vec{x}_{[s+1]}$ puis la matrice $\widehat{G}_{[s+1]}$ à l'aide des équations suivantes :

$$\vec{x}_{[s+1]} = \frac{\sum_{i\geq 1}\left(\widehat{D}^{T} \cdot \widehat{K}_{i}^{T} \cdot \widehat{G}_{[s]}^{T} \cdot \vec{y}_{i}\right)}{\left\|\sum_{i\geq 1}\left(\widehat{D}^{T} \cdot \widehat{K}_{i}^{T} \cdot \widehat{G}_{[s]}^{T} \cdot \vec{y}_{i}\right)\right\|}$$

$$\widehat{G}_{[s+1]} = \pi\left(\sum_{i\geq 1}\left(\vec{y}_{i} \cdot \vec{x}_{[s+1]}^{T} \cdot \widehat{D}^{T} \cdot \widehat{K}_{i}^{T}\right)\right)$$

la suite $\{\vec{x}_{[s]}\}$ désignant une deuxième suite de vecteurs de direction viseur, les suites $\widehat{G}_{[s]}$ et $\vec{x}_{[s]}$ convergeant respectivement vers $\widehat{G}$ et $\vec{x}_0$ ; et

. - dans une dix-neuvième sous-étape d'arrêt (818), arrêter le processus itératif, effectué au travers de la dix-huitième sous-étape (816), lorsque les limites $\widehat{G}$ et éventuellement $\vec{x}_0$ sont approximées avec une précision suffisante définie par une ou deux valeurs de seuil prédéterminées.

10. Procédé d'harmonisation duale d'un sous-système de détection de posture DDP, intégré dans un système de visualisation tête haute porté, selon l'une quelconque des revendications 1 à 9, dans lequel le système de visualisation tête haute porté (2) est embarqué à bord d'un véhicule porteur compris dans l'ensemble des aéronefs, des avions, des hélicoptères, des automobiles, des robots.

11. Système de visualisation tête haute porté, embarqué dans un véhicule porteur, et comprenant :

. - un dispositif de visualisation (12) *Dv* tête haute porté transparent,
. - un dispositif de référence (14) $D_{ref}$, ayant un repère de référence $R_{ref}$, pouvant être soit un repère du véhicule porteur, soit un repère géographique local, soit un repère terrestre ;
. - un sous-système (16) de détection de posture DDP, ayant :

un premier élément solide de poursuite (18) S1, attaché solidairement au dispositif de visualisation (12)$D_v$ ;
un deuxième élément solide fixe (20) S2, lié solidairement au dispositif de référence (14) $D_{ref}$, et
un moyen (26) de mesure et de détermination de l'orientation relative $\widehat{K}$ du premier élément mobile de poursuite (18) S1 par rapport au deuxième élément fixe (22) S2,

. - un sous-système d'harmonisation duale (32) pour harmoniser le système de visualisation en tête haute (2) et le sous-système de détection de posture DDP (16), le sous-système d'harmonisation duale (32) ayant un calculateur d'harmonisation duale et un interface IHS pour gérer les acquisitions des mesures d'harmonisation, le système de visualisation tête haute porté étant **caractérisé en ce que** le sous-système d'harmonisation duale (32) et le sous-système de détection de posture DDP (16) sont configurés pour :
. - dans une première étape (54), effectuer une série d'un nombre prédéterminé N de mesures d'orientations relatives $\widehat{K}_l$, i variant de 1 à N, du premier élément mobile de poursuite (18) S1 par rapport au deuxième élément fixe (22) S2 du sous-système de détection de posture DDP (16), correspondant à des visées Vi différentes, i variant de 1 à N, dans lesquels un ou plusieurs éléments différents prédéterminé d'informations de pilotage affichés dans le dispositif de visualisation (12) $D_v$ sont superposés ou alignés avec un ou plusieurs amers correspondants du monde réel extérieur ; puis
. - dans une deuxième étape (56) et en utilisant un algorithme d'harmonisation duale, calculer conjointement la matrice d'orientation relative $\widehat{R}(S1/v)$ du premier élément de poursuite du sous-système de détection de posture (16) 18 S1 vers dispositif de visualisation $D_v$ et/ou la matrice d'orientation relative $\widehat{R}(ref/S2)$ du dispositif de référence externe $D_{Ref}$ vers deuxième élément solide fixe (20) S2 du sous-système de détection de posture (16), respectivement comme la matrice de rotation de biais à droite $\widehat{D}$ et la matrice de rotation de biais à gauche $\widehat{G}$ solutions conjointes du système d'équations d'harmonisation duale : $\widehat{U}_i = \widehat{G} \cdot \widehat{K}_i \cdot \widehat{D}$, i variant de 1 à N et **en ce que** le minimum du nombre de mesures N requis dépend du nombre L de degrés de liberté angulaire erronés ou inexploitables des matrices de rotation $\widehat{R}(S1/v)$ et $\widehat{R}(ref/S2)$ du système de visualisation en tête haute, ledit nombre L étant un entier supérieur ou égal à 1 et inférieur ou égal à 6, et

la résolution du système d'équations $\hat{U}_i = \hat{G} \cdot \hat{K}_i \cdot \hat{D}$ , i variant de 1 à N utilise un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A) - A$ sur l'ensemble des matrice de rotation $3 \times 3$, pour déterminer la rotation à droite $\hat{D}$ et la rotation à gauche $\hat{G}$ .

12. Système de visualisation tête haute porté, embarqué dans un véhicule porteur, selon la revendication 11, dans lequel le sous-système d'harmonisation duale (32) et le sous-système de détection de posture DDP (16) sont configurées pour mettre en œuvre les première et deuxième étapes telles que définies dans l'une quelconque des revendications 2 à 10.

13. Véhicule porteur, compris dans l'ensemble des aéronefs, des avions, des hélicoptères, des automobiles, des robots, et dans lequel est installé un système de visualisation tête haute porté, défini selon l'une quelconque des revendications 10 à 12.

## Patentansprüche

1. Duales Harmonisierungsverfahren eines Untersystems zur Detektion der Haltung DDP, welches in ein getragenes Head-up-Displaysystem (2) integriert ist, wobei das getragene Head-up-Displaysystem an Bord eines Trägerfahrzeugs mitgeführt wird und Folgendes umfasst:

- eine durchsichtige getragene Head-up-Displayvorrichtung (12)$D_v$,
- eine äußere Referenzvorrichtung (14) $D_{ref}$, welche ein äußeres Referenzkoordinatensystem $R_{ref}$ aufweist, welches entweder ein Koordinatensystem des Trägerfahrzeugs, oder ein lokales geographisches Koordinatensystem oder ein terrestrisches Koordinatensystem sein kann;
- ein Untersystem (16) zur Detektion der Haltung DDP, Folgendes aufweisend:

ein erstes festes Verfolgungselement (18) S1, welches fest an der Displayvorrichtung 12 $D_v$ befestigt ist; ein zweites festes Fixelement (20) S2, welches fest mit der Referenzvorrichtung (14) $D_{ref}$ verbunden ist, und ein Mittel (26) zur Messung und zur Bestimmung der relativen Ausrichtung $\hat{K}$ des ersten beweglichen Verfolgungselements (18) S1 in Bezug auf das zweite Fixelement (22) S2,

- ein duales Harmonisierungs-Untersystem (32) zur Harmonisierung des getragenen Head-up-Displaysystems (2) und des Untersystems zur Detektion der Haltung DDP (16), wobei das duale Harmonisierungsverfahren folgende Schritte umfasst:

- in einem ersten Schritt (54; 104, 204; 304; 404; 504; 604; 704; 804), Durchführen einer Serie mit einer vorbestimmten Anzahl N von relativen Ausrichtungsmessungen $\hat{K}_i$, wobei i von 1 bis N variiert, des ersten mobilen Verfolgungselements (18) S1 in Bezug auf das zweite Fixelement (22) S2 des Untersystems zur Detektion der Haltung DDP (16), welche unterschiedlichen Peilungen Vi entsprechen, wobei i von 1 bis N variiert, wobei ein oder mehrere unterschiedliche vorbestimmte Steuerungs-Informationselemente, welche in der Displayvorrichtung (12) $D_v$ angezeigt werden, eine oder mehrere entsprechende Landmarken der tatsächlichen äußeren Welt überlagern oder darauf ausgefluchtet sind, deren theoretische Rotationsmatrizen $\hat{U}_i$ in dem Referenzkoordinatensystem bekannt sind; und anschließend
- in einem zweiten Schritt (56; 106; 206; 306; 406; 506; 606; 706; 806) und unter Verwendung eines dualen Harmonierungsalgorithmus, gleichzeitiges Berechnen der relativen Ausrichtungsmatrix $\hat{R}(S1/v)$ des ersten Verfolgungselements (18) S1 des Untersystems zur Detektion der Haltung (16) in Richtung der Displayvorrichtung $D_v$ und/oder der relativen Ausrichtungsmatrix $\hat{R}(ref/S2)$ der äußeren Referenzvorrichtung $D_{Ref}$ in Richtung des zweiten Fixelements (20) S2 des Untersystems zur Detektion der Haltung (16), jeweils als die Rotationsmatrix schräg nach rechts $\hat{D}$ und die Rotationsmatrix schräg nach links $\hat{G}$" die gleichzeitige Lösungen des Gleichungssystems der dualen Harmonisierung: $\hat{U}_i = \hat{G} \cdot \hat{K}_i \cdot \hat{D}$ sind, wobei i von 1 bis N variiert,

wobei das Verfahren zur dualen Harmonisierung **dadurch gekennzeichnet ist, dass** die erforderliche Mindestanzahl an Messungen N von der Anzahl L der falschen oder unverwertbaren Winkelfreiheitsgrade der Rotationsmatrizen $\hat{R}(S1/v)$ und $\hat{R}(ref/S2)$ des Head-up-Displaysystems abhängt, wobei die Anzahl L eine Ganzzahl größer oder gleich 1 und kleiner oder gleich 6 ist, und die Lösung des Gleichungssystems $\hat{U}_i = \hat{G} \cdot \hat{K}_i \cdot \hat{D}$" wobei i von 1 bis N variiert, einen Aufrichtungs-Operator

$\pi(.)$ verwendet, welcher eine beliebige Matrix A in eine möglichst nahe quadratische 3×3-Rotationsmatrix $\pi(A)$ im Sinne der kleinsten Quadrate über sämtliche Terme der Matrix $\pi(A)$-A über sämtliche 3x3-Rotationsmatrizen verwandelt, um die Rotation nach rechts $\hat{D}$ und die Rotation nach links $\hat{D}D\,\hat{G}$ zu bestimmen.

2. Verfahren zur dualen Harmonisierung eines Untersystems zur Detektion der Haltung DDP, integriert in ein getragenes Head-up-Displaysystem, nach Anspruch 1, wobei und gemäß einer ersten Konfiguration (102),

die Anzahl der falschen oder unverwertbaren Winkelfreiheitsgrade der Rotationsmatrix schräg nach rechts $\hat{D}$ gleich drei ist und die Anzahl der falschen oder unverwertbaren Winkelfreiheitsgrade der Rotationsmatrix schräg nach links $\hat{G}$ gleich drei ist,
der erste Schritt (104) eine Anzahl N von größer oder gleich 3 Messungen ausführt, für welche die Peilungen Vi einer Ausfluchtung dreidimensionaler Koordinatensysteme entsprechen, welche auf beobachteten äußeren dreidimensionalen Koordinatensystemen angezeigt werden, und
der zweite Schritt (106) der Lösung des Gleichungssystems der dualen Harmonisierung eine erste Gruppe (112) von Teilschritten umfasst, welche darin besteht:

- in einem ersten Teilschritt (114), eine "Leit-" Messung als die erste Messung aus den N Messungen auszuwählen, welche i gleich 1 entspricht, und man für i = 2, ..., $N$ die Rotationsmatrizen $\hat{U}_{1,i}$ und $\hat{K}_{1,i}$ mithilfe folgender Gleichungen berechnet: $\hat{U}_{1,i} = \hat{U}_1^T \cdot \hat{U}_i$ und $\hat{K}_{1,i} = \hat{K}_1^T \cdot \hat{K}_i$; und anschließend
- in einem zweiten Teilschritt (116), für i = 2, ..., $N$ die Haupteinheitsvektoren der Rotationen $\hat{U}_{1,i}$ und $\hat{K}_{1,i}$ zu bestimmen, jeweils bezeichnet durch $\vec{u}_i$ und $\vec{k}_i$; und anschließend
- in einem dritten Teilschritt (118), die rechte Matrix $\hat{D}$ mithilfe der folgenden Gleichung zu bestimmen:

$$\widehat{D} = \pi\left(\sum_{i>2}\left(\vec{k}_i \cdot \vec{u}_i^{\,T}\right)\right)$$

und anschließend
- in einem vierten Teilschritt (120), die Rotationsmatrix nach links $\hat{G}$ anhand der Matrix $\hat{D}$, welche im dritten Teilschritt (318) berechnet wurde, mithilfe folgender Gleichung zu bestimmen:

$$\widehat{G} = \pi\left(\sum_{i>1}\left(\hat{U}_i \cdot \hat{D}^T \cdot \hat{K}_i^{\,T}\right)\right)$$

3. Verfahren zur dualen Harmonisierung eines Untersystems zur Detektion der Haltung DDP, integriert in ein getragenes Head-up-Displaysystem, nach Anspruch 1, wobei und gemäß einer zweiten Konfiguration (202),

die Anzahl der falschen oder unverwertbaren Winkelfreiheitsgrade der Rotationsmatrix schräg nach rechts $\hat{D}$ gleich drei ist und der einzige falsche oder unverwertbare Winkelfreiheitsgrad der Rotationsmatrix schräg nach links $\hat{G}$ der Seitenwinkel ist, wobei davon ausgegangen wird, dass der Höhenwinkel und der Rollwinkel mit einer hinreichenden Genauigkeit bekannt sind; und
der erste Schritt (204) eine Anzahl N von größer oder gleich 4 Messungen ausführt, für welche die Peilungen Vi einer Ausfluchtung dreidimensionaler Koordinatensysteme entsprechen, welche auf beobachteten dreidimensionalen Koordinatensystemen angezeigt werden, und
der zweite Schritt (206) der Lösung des Gleichungssystems der dualen Harmonisierung eine zweite Gruppe (212) von Teilschritten umfasst, welche darin besteht:

- in einem vierten Teilschritt (214), für i = 2, ..., $N,$ die Matrizen $\hat{U}_{1,i}$ und die Vektoren $\vec{q}_i$ mithilfe folgender Gleichungen zu berechnen:

$\hat{U}_{1,i} = \hat{U}_1^T \cdot \hat{U}$ und $\vec{q}_i = \hat{Q}_i^T \cdot \vec{k},$

$$\vec{k} = \begin{pmatrix} 0 \\ 0 \\ 1 \end{pmatrix}$$

wobei der Vektor $\vec{k}$ durch die Gleichung ; definiert wird; und anschließend

- in einem fünften Teilschritt (216) der Initialisierung, eine erste Folge von Matrizen $\hat{D}_{[s]}\}$ zu initialisieren, wobei [s] den gesamten Rang über den Verlauf der Folge $\hat{D}_{[s]}\}$ bezeichnet, indem man $\hat{D}_{[0]}$ gleich $I_3$ festsetzt, wobei $I_3$ die Identitätsmatrix bezeichnet; und anschließend
- einen sechsten iterativen Schritt (218) zu wiederholen, wobei man von der Iteration [s] zu [s + 1] übergeht, indem man den Vektorwert $\vec{d}_{[s+1]}$ und anschließend den Wert $\hat{D}_{[s+1]}$ der ersten Matrixfolge $\{\hat{D}_{[s]}$ mithilfe folgender Gleichungen berechnet

$$\vec{d}_{[s+1]} = \frac{\sum_{i \geq 2} (\hat{U}_{1,i} \cdot \hat{D}_{[s]}^T \cdot \vec{q}_i)}{\left\| \sum_{i \geq 2} (\hat{U}_{1,i} \cdot \hat{D}^T \cdot \vec{q}_i) \right\|}$$

$$\hat{D}_{[s+1]} = \pi \left( \sum_{i > 2} (\vec{q}_i \cdot \vec{d}_{[s+1]}^T \cdot \hat{U}_{1,i}) \right)$$

wobei die Folge $\{\vec{d}_{[s]}\}$ eine zweite Hilfsfolge von Vektoren bezeichnet und die Folge $\{\hat{D}_{[s]}\}$ zu $\{\hat{D}_{[s]}\}$ konvergiert; und
- in einem siebten Teilschritt (220) das iterative Verfahren zu stoppen, welches über den sechsten Schritt (218) ausgeführt wurde, wenn die Grenze $\hat{D}$ mit einer hinreichenden Genauigkeit angenähert wurde, welche durch einen vorbestimmten Schwellenwert definiert ist.

4. Verfahren zur dualen Harmonisierung eines Untersystems zur Detektion der Haltung DDP, integriert in ein getragenes Head-up-Displaysystem, nach Anspruch 1, wobei und gemäß einer dritten Konfiguration (302),

die Anzahl der falschen oder unverwertbaren Winkelfreiheitsgrade der Rotationsmatrix schräg nach rechts $\hat{D}$ gleich drei ist und die Anzahl der falschen oder unverwertbaren Winkelfreiheitsgrade der Rotationsmatrix schräg nach links $\hat{G}$ gleich drei ist, und
der erste Schritt (304) eine Anzahl N von größer oder gleich 4 Messungen ausführt, für welche die Peilungen Vi einer Ausfluchtung mehrerer unterschiedlicher Peilrichtungen $\vec{x}_i$ auf mehrere angepeilte äußere Richtungen $\vec{y}_l$ entsprechen, welche in dem äußeren Bezugskoordinatensystem $R_{Ref}$ ohne Anpassung der Rollbewegung bekannt sind, wobei beide Vektorfamilien $\{\vec{x}_i\}$ und $\{\vec{y}_i\}$ frei sind; und
der zweite Schritt (306) der Lösung des Gleichungssystems der dualen Harmonisierung: $\vec{y}_i = \hat{G} \cdot \hat{K}_i \cdot \hat{D} \cdot \vec{x}_i$ wobei i von 1 bis N variiert, eine dritte Gruppe (312) von Teilschritten umfasst, welche darin besteht:

- in einem achten Teilschritt (314) der Initialisierung, eine erste Folge von linken Matrizen $\overline{\{G_{[s]}\}}$ zu initialisieren, wobei [s] den gesamten Rang des Verlaufs dieser ersten Folge bezeichnet, indem man $\hat{G}_{[0]}$ gleich $I_3$ festsetzt, wobei $I_3$ die Identitätsmatrix bezeichnet; und anschließend
- einen neunten iterativen Teilschritt (316) zu wiederholen, wobei man von der Iteration [s] zu [s + 1] übergeht, indem man die Matrix $\hat{D}_{[s+1]}$ und anschließend die Matrix $\hat{G}_{[s+1]}$ mithilfe folgender Gleichungen berechnet:

$$\hat{D}_{[s+1]} = \pi \left( \sum_{i > 1} \left( \hat{K}_i^T \cdot \hat{G}_{[s]}^T \cdot \vec{y}_i \cdot \vec{x}_i^T \right) \right)$$

$$\hat{G}_{[s+1]} = \pi \left( \sum_{i > 1} \left( \vec{y}_i \cdot \vec{x}_i^T \cdot \hat{D}_{[s+1]}^T \cdot \hat{K}_i^T \right) \right)$$

wobei die Folge $\{\hat{D}_{[s]}\}$ eine zweite Folge von rechten Matrizen bezeichnet, und die Folgen $\hat{D}_{[s]}$ und $\hat{G}_{[s]}$ jeweils zu $\hat{D}$ und $\hat{G}$, konvergieren; und

    - in einem zehnten Stopp-Teilschritt (318), das iterative Verfahren zu stoppen, welches über den neunten Teilschritt (316) ausgeführt wird, wenn die Grenzen $\hat{D}$ a und $\hat{G}$ mit einer hinreichenden Genauigkeit angenähert sind.

**5.** Verfahren zur dualen Harmonisierung eines Untersystems zur Detektion der Haltung DDP, integriert in ein getragenes Head-up-Displaysystem, nach Anspruch 1, wobei und gemäß einer vierten Konfiguration (402),

die Anzahl der falschen oder unverwertbaren Winkelfreiheitsgrade der Rotationsmatrix schräg nach rechts $\hat{D}$ gleich drei ist und die Rotationsmatrix schräg nach links $\hat{G}$ angenommenermaßen bekannt ist; und
der erste Schritt (404) eine Anzahl N von größer oder gleich 3 Messungen ausführt, für welche die Peilungen Vi einer Ausfluchtung N unterschiedlicher Peilrichtungen $\vec{x}_i$ auf eine einzige angepeilte äußere Richtung $\vec{y_0}$, entsprechen, welche in dem äußeren Bezugskoordinatensystem $R_{Rej}$ ohne Anpassung der Rollbewegung bekannt ist, wobei die Vektorfamilie $\{\vec{x}_i\}$ frei ist; und
der zweite Schritt (406) der Lösung des Gleichungssystems der dualen Harmonisierung $\hat{G} \cdot \hat{K}_i \cdot \hat{D} \cdot \vec{x}_i = \vec{y}_0$ wobei i von 1 bis N variiert, die Rotationsmatrix schräg nach rechts $\hat{D}$ durch folgende Gleichung bestimmt:

$$\hat{D} = \pi\left( \sum_{i \geq 1} \left( \hat{K}_i^{\mathrm{T}} \cdot \hat{G}^{\mathrm{T}} \cdot \vec{y}_0 \cdot \vec{x}_i^{\mathrm{T}} \right) \right)$$

**6.** Verfahren zur dualen Harmonisierung eines Untersystems zur Detektion der Haltung DDP, integriert in ein getragenes Head-up-Displaysystem, nach Anspruch 1, wobei und gemäß einer fünften Konfiguration (502),

die Anzahl der falschen oder unverwertbaren Winkelfreiheitsgrade der Rotationsmatrix schräg nach rechts $\hat{D}$ gleich drei ist und die Rotationsmatrix schräg nach links $\hat{G}$ angenommenermaßen bekannt ist; und
der erste Schritt (504) eine Anzahl N von größer oder gleich 4 Messungen ausführt, für welche die Peilungen Vi einer Ausfluchtung N unterschiedlicher Peilrichtungen $\vec{x}_i$ auf eine einzige unbekannte angepeilte äußere Richtung $\vec{y_0}$ ,ohne Anpassung der Rollbewegung entsprechen, , wobei die Vektorfamilie $\{\vec{x}_i\}$ frei ist; und
der zweite Schritt (506) der Lösung des Gleichungssystems der dualen Harmonisierung: $\hat{G} \cdot \hat{K}_i \cdot \hat{D} \cdot \vec{x}_i = \vec{y}_0$ wobei i von 1 bis N variiert, eine fünfte Gruppe (512) von Teilschritten umfasst, welche darin besteht:

    - in einem elften Teilschritt (514) der Initialisierung, eine erste Folge von rechten Matrizen $\{\hat{D}_{[s]}\}$ zu initialisieren, wobei [s] den gesamten Rang über den Verlauf der Folge $\{\hat{D}_{[s]}\}$ bezeichnet, indem man $\hat{D}_{[0]}$ gleich $I_3$ festsetzt, wobei $I_3$ die Identitätsmatrix bezeichnet; und anschließend
    - einen zwölften iterativen Teilschritt (516) zu wiederholen, wobei man von der Iteration [s] zu [s+1] übergeht, indem man den Vektor $\vec{y}_{[s+1]}$ und anschließend die Matrix $\hat{D}_{[s+1]}$ mithilfe folgender Gleichungen berechnet:

$$\vec{y}_{[s+1]} = \frac{\sum_{i \geq 1} \left( \hat{G} \cdot \hat{K}_i \cdot \hat{D}_{[s]} \cdot \vec{x}_i \right)}{\left\| \sum_{i \geq 1} \left( \hat{G} \cdot \hat{K}_i \cdot \hat{D}_{[s]} \cdot \vec{x}_i \right) \right\|}$$

$$\hat{D}_{[s+1]} = \pi\left( \sum_{i > 1} \left( \hat{K}_i^{\mathrm{T}} \cdot \hat{G}^{\mathrm{T}} \cdot \vec{y}_{[s+1]} \cdot \vec{x}_i^{\mathrm{T}} \right) \right)$$

wobei die Folge $\{\vec{y}_{[s]}\}$ eine zweite Folge von Vektoren einer äußeren Richtung bezeichnet, und die Folgen $\{\vec{y}_{[s]}\}$ und $\{\hat{D}_{[s]}\}$ jeweils zu $\vec{y_0}$ und $\hat{D}$ konvergieren; und

    - in einem dreizehnten Stopp-Teilschritt (518), das iterative Verfahren zu stoppen, welches über den zwölften Teilschritt (516) durchgeführt wird, wenn die Grenzen $\hat{D}$ und $\hat{G}$ mit einer hinreichenden Genauigkeit angenähert sind, welche durch einen oder zwei vorbestimmten Schwellenwerte definiert ist.

7. Verfahren zur dualen Harmonisierung eines Untersystems zur Detektion der Haltung DDP, integriert in ein getragenes Head-up-Displaysystem, nach Anspruch 1, wobei und gemäß einer sechsten Konfiguration (602),

- die Anzahl der falschen oder unverwertbaren Winkelfreiheitsgrade der Rotationsmatrix schräg nach rechts $\hat{D}$ gleich drei ist und die Rotationsmatrix schräg nach links $\hat{G}$ unbekannt und unbestimmbar ist, und
- der erste Schritt (604) eine Anzahl N von größer oder gleich 4 Messungen ausführt, für welche die Peilungen Vi einer Ausfluchtung N unterschiedlicher Peilrichtungen $\vec{x}_i$ auf eine einzige unbekannte angepeilte äußere Richtung $\vec{y}_0$ ohne Anpassung der Rollbewegung entsprechen , wobei die Vektorfamilie $\{\vec{x}_i\}$ frei ist, und die Lösung des Gleichungssystems der dualen Harmonisierung: $\hat{G} \cdot \hat{K}_i \cdot \hat{D} \cdot \vec{x}_i = \vec{y}_0$ wobei i von 1 bis N variiert, auf die Lösung des reduzierten Gleichungssystems der dualen Harmonisierung:
$\hat{K}_i \cdot \hat{D} \cdot \vec{x}_i = \vec{z}_0$ f wobei i von 1 bis 4 variiert, indem man $\vec{z}_0 = \hat{G}^T \cdot \vec{y}_0$, notiert, bringt; und
- der zweite Schritt (608) der Lösung des reduzierten Gleichungssystems der dualen Harmonisierung eine sechste Gruppe (612) von Teilschritten umfasst, welche darin besteht:
- in einem vierzehnten Teilschritt (614) der Initialisierung, eine erste Folge von rechten Matrizen $\{\hat{D}_{[s]}$ zu initialisieren, wobei [s] den gesamten Rang über den Verlauf der Folge $\{\hat{D}_{[s]}$ bezeichnet, indem man $\hat{D}_{[0]}$ gleich $I_3$ festsetzt, wobei $I_3$ die Identitätsmatrix bezeichnet; und anschließend
- einen fünfzehnten iterativen Teilschritt (616) zu wiederholen, wobei man von der Iteration [s] zu [s + 1] übergeht, indem man den Vektor $\vec{z}_{[s+1]}$ und anschließend die Matrix $\hat{D}_{[s+1]}$ mithilfe folgender Gleichungen berechnet:

$$\vec{z}_{[s+1]} = \frac{\sum_{i \geq 1}(\hat{K}_i \cdot \hat{D}_{[s]} \cdot \vec{x}_i)}{\left\|\sum_{i \geq 1}(\hat{K}_i \cdot \hat{D}_{[s]} \cdot \vec{x}_i)\right\|}$$

$$\hat{D}_{[s+1]} = \pi\left(\sum_{i>1}\left(\hat{K}_i^T \cdot \vec{z}_{[s+1]} \cdot \vec{x}_i^T\right)\right)$$

wobei die Folge $\{\vec{z}_{[s]}\}$ eine zweite Hilfsfolge von Vektoren bezeichnet und die Folge $\{\hat{D}_{[s]}\}$ zu $\hat{D}$ konvergiert; und
- in einem sechzehnten Stopp-Teilschritt (618) das iterative Verfahren zu stoppen, welches über den fünfzehnten Schritt (616) ausgeführt wurde, wenn die Grenze $\hat{D}$ mit einer hinreichenden Genauigkeit angenähert wurde, welche durch einen vorbestimmten Schwellenwert definiert ist.

8. Verfahren zur dualen Harmonisierung eines Untersystems zur Detektion der Haltung DDP, integriert in ein getragenes Head-up-Displaysystem, nach Anspruch 1, wobei und gemäß einer siebten Konfiguration (702),

die Anzahl der falschen oder unverwertbaren Winkelfreiheitsgrade der Rotationsmatrix schräg nach links $\hat{G}$ gleich drei ist und die Rotationsmatrix schräg nach rechts $\hat{D}$ angenommenermaßen bekannt ist; und
der erste Schritt (704) eine Anzahl N von größer oder gleich 3 Messungen ausführt, für welche die Peilungen Vi einer Ausfluchtung einer einzigen bekannten Peilrichtung $\vec{x}_0$ auf N bekannte angepeilte äußere Richtungen $\vec{y}_i$, ohne Anpassung der Rollbewegung entsprechen, , wobei die Vektorfamilie $\{\vec{y}_i\}$ frei ist, und
der zweite Schritt (706) der Lösung des Gleichungssystems der dualen Harmonisierung: $\hat{G} \cdot \hat{K}_i \cdot \hat{D} \cdot \vec{x}_0 = \vec{y}_i$, wobei i von 1 bis N variiert, die gesuchte linke Rotationsmatrix $\hat{G}$ mithilfe folgender Gleichung bestimmt:

$$\hat{G} = \pi\left(\sum_{i>1}\left(\vec{y}_i \cdot \vec{x}_0^T \cdot \hat{D}^T \cdot \hat{K}_i^T\right)\right)$$

9. Verfahren zur dualen Harmonisierung eines Untersystems zur Detektion der Haltung DDP, integriert in ein getragenes Head-up-Displaysystem, nach Anspruch 1, wobei und gemäß einer achten Konfiguration (802),

- die Anzahl der falschen oder unverwertbaren Winkelfreiheitsgrade der Rotationsmatrix schräg nach links $\hat{G}$

gleich drei ist und die Rotationsmatrix schräg nach links $\hat{D}$ angenommenermaßen bekannt ist; und

- der erste Schritt (804) eine Anzahl N von größer oder gleich 4 Messungen ausführt, für welche die Peilungen Vi einer Ausfluchtung einer einzigen unbekannten Peilrichtung $\vec{x}_0$ auf N bekannte angepeilte äußere Richtungen $\vec{y}_i$ ohne Anpassung der Rollbewegung entsprechen, wobei die Vektorfamilie $\{\vec{y}_i\}$ frei ist; und

- der zweite Schritt (806) der Lösung des Gleichungssystems der dualen Harmonisierung: $\hat{G} \cdot \hat{K}_i \cdot \hat{D} \cdot \vec{x}_0 = \vec{y}_i$ wobei i von 1 bis N variiert, eine achte Gruppe (812) von Teilschritten umfasst, welche darin besteht:

- in einem siebzehnten Teilschritt (814), eine erste Folge von linken Matrizen $\{\hat{G}_{[s]}\}$ zu initialisieren, wobei [s] den gesamten Rang über den Verlauf der Folge $\{\hat{G}_{[s]}\}$ bezeichnet, indem man $\hat{G}_{[0]}$ gleich $I_3$ festsetzt, wobei $I_3$ die Identitätsmatrix bezeichnet; und anschließend

- einen achtzehnten iterativen Teilschritt (816) zu wiederholen, wobei man von der Iteration [s] zu [s + 1] übergeht, indem man den Vektor $\vec{x}_{[s+1]}$ und anschließend die Matrix $\hat{G}_{[s+1]}$ mithilfe folgender Gleichungen berechnet:

$$\vec{x}_{[s+1]} = \frac{\sum_{i \geq 1} \left( \hat{D}^T \cdot \hat{K}_i^{\ T} \cdot \hat{G}_{[s]}^T \cdot \vec{y}_i \right)}{\left\| \sum_{i \geq 1} \left( \hat{D}^T \cdot \hat{K}_i^{\ T} \cdot \hat{G}_{[s]}^T \cdot \vec{y}_i \right) \right\|}$$

$$\hat{G}_{[s+1]} = \pi \left( \sum_{i > 1} \left( \vec{y}_i \cdot \vec{x}_{[s+1]}^{\ T} \cdot \hat{D}^T \cdot \hat{K}_i^{\ T} \right) \right)$$

wobei die Folge $\{\vec{x}_{[s]}\}$ eine zweite Folge von Vektoren mit Peilvorrichtungsrichtung bezeichnet, und die Folgen $\hat{G}_{[s]}$ und $\vec{x}_{[s]}$ jeweils zu $\hat{G}$ und $\vec{x}_0$ konvergieren; und

- in einem neunzehnten Stopp-Teilschritt (818), das iterative Verfahren zu stoppen, welches über den achtzehnten Teilschritt (816) durchgeführt wird, wenn die Grenzen $\hat{G}$ und eventuell $\vec{x}_0$ mit einer hinreichenden Genauigkeit angenähert sind, welche durch einen oder zwei vorbestimmte Schwellenwerte definiert ist.

10. Verfahren zur dualen Harmonisierung eines Untersystems zur Detektion der Haltung DDP, integriert in ein getragenes Head-up-Displaysystem, nach einem der Ansprüche 1 bis 9, wobei:
das getragene Head-up-Displaysystem (2) an Bord eines Trägerfahrzeugs mitgeführt wird, umfasst in der Gruppe, bestehend aus Luftfahrzeugen, Flugzeugen, Hubschraubern, Automobilen und Robotern.

11. Getragenes Head-up-Displaysystem, mitgeführt an Bord eines Trägerfahrzeugs, Folgendes umfassend:

- eine durchsichtige getragene Head-up-Displayvorrichtung (12)$D_v$,
- eine Referenzvorrichtung (14) $D_{ref}$, welche ein Referenzkoordinatensystem $R_{ref}$ aufweist, welches entweder ein Koordinatensystem des Trägerfahrzeugs, oder ein lokales geographisches Koordinatensystem oder ein terrestrisches Koordinatensystem sein kann;
- ein Untersystem (16) zur Detektion der Haltung DDP, Folgendes aufweisend:

ein erstes festes Verfolgungselement (18) S1, welches fest an der Displayvorrichtung 12 $D_v$ befestigt ist;
ein zweites festes Fixelement (20) S2, welches fest mit der Referenzvorrichtung (14) $D_{ref}$ verbunden ist, und
ein Mittel (26) zur Messung und zur Bestimmung der relativen Ausrichtung $\hat{K}$ des ersten beweglichen Verfolgungselements (18) S1 in Bezug auf das zweite Fixelement (22) S2,

- Untersystem zur dualen Harmonisierung (32) zur Harmonisierung des Head-up-Displaysystems (2) und des Untersystems zur Detektion der Haltung DDP (16), wobei das Untersystem zur dualen Harmonisierung (32) einen Rechner zur dualen Harmonisierung und eine IHS-Schnittstelle zur Verwaltung der Erfassungen der Harmonisierungsmessungen aufweist,
wobei das Untersystem zur dualen Harmonisierung (32) und das untere System zur Detektion der Haltung DDP (16) konfiguriert sind zum:

- in einem ersten Schritt (54), Durchführen einer Serie mit einer vorbestimmten Anzahl N von relativen Ausrichtungsmessungen $\hat{K}_i$, wobei i von 1 bis N variiert, des ersten mobilen Verfolgungselements (18) S1 in Bezug auf das zweite Fixelement (22) S2 des Untersystems zur Detektion der Haltung DDP (16), welche unterschiedlichen Peilungen Vi entsprechen, wobei i von 1 bis N variiert, wobei ein oder mehrere unterschiedliche vorbestimmte Steuerungs-Informationselemente, welche in der Displayvorrichtung (12) $D_v$ angezeigt werden, eine oder mehrere entsprechende Landmarken der tatsächlichen äußeren Welt überlagern oder darauf ausgefluchtet sind; und anschließend

- in einem zweiten Schritt (56) und unter Verwendung eines dualen Harmonierungsalgorithmus, gleichzeitigen Berechnen der relativen Ausrichtungsmatrix $\hat{R}(S1/v)$ des ersten Verfolgungselements (18) S1 des Untersystems zur Detektion der Haltung (16) in Richtung der Displayvorrichtung $D_v$ und/oder der relativen Ausrichtungsmatrix $\hat{R}(ref/S2)$ der äußeren Referenzvorrichtung $D_{Ref}$ in Richtung des zweiten Fixelements (20) S2 des Untersystems zur Detektion der Haltung (16), jeweils als die Rotationsmatrix schräg nach rechts $\hat{D}$ und die Rotationsmatrix schräg nach links $\hat{G}''$ die gleichzeitige Lösungen des Gleichungssystems der dualen Harmonisierung: $\hat{U}_i = \hat{G} \cdot \hat{K}_i \cdot \hat{D}$, sind, wobei i von 1 bis N variiert,

wobei das Head-up-Anzeigesystem **dadurch gekennzeichnet ist, dass** die erforderliche Mindestanzahl an Messungen N von der Anzahl L der falschen oder unverwertbaren Winkelfreiheitsgrade der Rotationsmatrizen $\hat{R}\{S1/v)$ und $\hat{R}(ref/S2)$ des Head-up-Anzeigesystems abhängt, wobei die Anzahl L eine Ganzzahl größer oder gleich 1 und kleiner oder gleich 6 ist, und dass die Lösung des Gleichungssystems $\hat{U}_i = \hat{G} \cdot \hat{K}_i \cdot \hat{D}$, i, wobei i von 1 bis N variiert, einen Aufrichtungs-Operator $\pi(.)$ verwendet, welcher eine beliebige Matrix A in eine möglichst nahe quadratische $3\times3$-Rotationsmatrix $\pi(A)$ im Sinne der kleinsten Quadrate über sämtliche Terme der Matrix $\pi(A)$ - A über sämtliche 3x3-Rotationsmatrizen verwandelt, um die Rotation nach rechts $\hat{D}$ und die Rotation nach links $\hat{G}$.zu bestimmen.

**12.** Getragenes Head-up-Displaysystem, mitgeführt an Bord eines Trägerfahrzeugs, nach Anspruch 11, wobei das Untersystem zur dualen Harmonisierung (32) und das Untersystem zur Detektion der Haltung DDP (16) konfiguriert sind, um den ersten und den zweiten Schritt nach einem der Ansprüche 2 bis 10 umzusetzen.

**13.** Trägerfahrzeug, umfasst in der Gruppe, bestehend aus Luftfahrzeugen, Flugzeugen, Hubschraubern, Automobilen, Robotern, in welchem ein getragenes Head-up-Displaysystem nach einem der Ansprüche 10 bis 12 installiert ist.

**Claims**

**1.** Method for dual harmonization of a DDP posture-detecting subsystem integrated into a worn head-up viewing system, the worn head-up viewing system (2) being located on-board a carrier vehicle and comprising:

- a transparent worn head-up viewing device (12) $D_v$,
- an exterior reference device (14) $D_{ref}$ having an exterior reference coordinate system $R_{ref}$ that can be either a coordinate system of the carrier vehicle or a local geographic coordinate system or a terrestrial coordinate system;
- a DDP posture-detecting subsystem (16) having:

  a tracking solid first element (18) S1 tightly attached to the viewing device (12) $D_v$;
  a fixed solid second element (20) S2 tightly joined to the reference device (14) $D_{ref}$, and
  a means (26) for measuring and determining the relative orientation $\hat{K}$ of the first mobile tracking element (18) S1 with respect to the fixed second element (22) S2,

    - a dual harmonization subsystem (32) for harmonizing the worn head-up viewing system (2) and the DDP posture-detecting subsystem (16),

  the dual harmonization method comprising the following steps consisting in

    - in a first step (54; 104, 204; 304; 404; 504; 604; 704; 804), carrying out a series of a preset number N of measurements of relative orientations $\hat{K}_i$, i varying from 1 to N, of the first mobile tracking element (18) S1 with respect to the fixed second element (22) S2 of the DDP posture-detecting subsystem (16) corresponding to different targeting actions Vi, i varying from 1 to N, in which measurements one or more different preset elements of steering information displayed in the viewing device (12) $D_v$ are superposed or aligned with one or more corresponding landmarks of the real outside world, the theoretical rotation matrices $\hat{U}_i$ of which in the exterior reference coordinate system are known; then

- in a second step (56; 106; 206; 306; 406; 506; 606; 706; 806), and using a dual harmonization algorithm, conjointly calculating the relative orientation matrix $\hat{R}$(S1/v) of the tracking first element (18) S1 of the posture-detecting subsystem (16) with respect to the viewing device $D_v$ and/or the relative orientation matrix $\hat{R}$(ref/S2) of the external reference device $D_{Ref}$ with respect to the fixed solid second element (20) S2 of the posture-detecting subsystem (16) respectively as the right-side bias rotation matrix $\hat{D}$ and the left-side bias rotation matrix $\hat{G}$, which are conjoint solutions of the system of dual harmonization equations: $\hat{U}_i = \hat{G} \cdot \hat{K}_i \cdot \hat{D}$, i varying from 1 to N;

the dual harmonization method being **characterized in that** the minimum required number N of measurements depends on the number L of erroneous or inexploitable degrees of angular freedom of the rotation matrices $\hat{R}$(S1/v) and $\hat{R}$(ref/S2) of the head-up viewing system, said number L being an integer higher than or equal to 1 and lower than or equal to 6, and
the resolution of the system of equations $\hat{U}_i = \hat{G} \cdot \hat{K}_i \cdot \hat{D}$, i varying from 1 to N, uses a rectification operator $\pi(.)$ that converts any matrix A into a 3x3 square rotation matrix $\pi(A)$, which matrix $\pi(A)$, of all the 3x3 rotation matrices, is the closest in the least-squares sense to all of the terms of the matrix $\pi(A) - A$, to determine the right-side rotation $D$ and the left-side rotation $\hat{G}$.

2. Method for dual harmonization of a DDP posture-detecting subsystem integrated into a worn head-up viewing system according to claim 1, wherein and in a first configuration (102),

the number of erroneous or inexploitable degrees of angular freedom of the right-side bias rotation matrix $D$ is equal to three and the number of erroneous or inexploitable degrees of angular freedom of the left-side bias rotation matrix $\hat{G}$ is equal to three,
the first step (104) carries out a number N higher than or equal to 3 of measurements for which the targeting actions Vi correspond to an alignment of displayed three-dimensional coordinate systems with observed exterior three-dimensional coordinate systems, and
the second step (106) of solving the system of dual harmonization equations comprises a first set (112) of substeps consisting in:

- in a first substep (114), choosing a "pivot" measurement as the first measurement among the N measurements, this pivot measurement corresponding to i equal to 1, and for i = 2, $\cdots$ , N the rotation matrices $\hat{U}_{1,i}$ and $\hat{K}_{1,i}$ are calculated using the equations: $\hat{U}_{1,i} = \hat{U}_1^T \cdot \hat{U}_i$ and $\hat{K}_{1,i} = \hat{K}_1^T \cdot \hat{K}_i$; then
- in a second substep (116), determining for i = 2, $\cdots$ , N the principle unit vectors of the rotations $\hat{U}_{1,i}$ and $\hat{K}_{1,i}$, designated by $\vec{u}_i$ and $\vec{k}_i$, respectively; then
- in a third substep (118), calculating the right matrix $\hat{D}$ using the equation:

$$\widehat{D} = \pi\left(\sum_{i \geq 2}\left(\vec{k}_i \cdot \vec{u}_i^T\right)\right)$$

then
- in a fourth substep (120), determining the left-side rotation matrix $\hat{G}$ on the basis of the matrix D calculated in the third substep (118), using the equation:

$$\widehat{G} = \pi\left(\sum_{i \geq 1}\left(\widehat{U}_i \cdot \widehat{D}^T \cdot \widehat{K}_i^T\right)\right)$$

3. Method for dual harmonization of a DDP posture-detecting subsystem integrated into a worn head-up viewing system according to claim 1, wherein and in a second configuration (202),

the number of erroneous or inexploitable degrees of angular freedom of the right-side bias rotation matrix $\hat{D}$ is equal to three and the single erroneous or inexploitable degree of angular freedom of the left-side bias rotation matrix $\hat{G}$ is the azimuth angle, the elevation and roll angles being assumed to be known with a sufficient precision; and

the first step (204) carries out a number N higher than or equal to 4 of measurements for which the targeting actions Vi correspond to an alignment of displayed three-dimensional coordinate systems with observed three-dimensional coordinate systems, and

the second step (206) of solving the system of dual harmonization equations comprises a second set (212) of substeps consisting in:

- in a fourth substep (214), for i = 2, $\cdots$ , N, calculating the matrices $\hat{U}_{1,i}$ and the vectors $\vec{q}_i$ using the equations:

$$\hat{U}_{1,i} = \hat{U}_1^T \cdot \hat{U}_i \text{ and } \vec{q}_i = \hat{Q}_i^T \cdot \vec{k},$$

the vector $\vec{k}$ being defined by the equation $\vec{k} = \begin{pmatrix} 0 \\ 0 \\ 1 \end{pmatrix}$ ; then

- in an initialization fifth substep (216), initializing a first sequence of matrices $\{\hat{D}_{[s]}\}$, [s] designating the current integer rank of advancement through the sequence $\{\hat{D}_{[s]}\}$, by setting $\hat{D}_{[0]}$ equal to $I_3$, $I_3$ being the identity matrix; then
- repeating an iterative sixth substep (218) passing from iteration [s] to iteration [s+1] by calculating the vector value $\vec{d}_{[s+1]}$, then the value $\hat{D}_{[s+1]}$ of the first matrix sequence $\{\hat{D}_{[s]}\}$, using the following equations:

$$\vec{d}_{[s+1]} = \frac{\sum_{i\geq 2}(\hat{U}_{1,i} \cdot \hat{D}_{[s]}^T \cdot \vec{q}_i)}{\left\|\sum_{i\geq 2}(\hat{U}_{1,i} \cdot \hat{D}^T \cdot \vec{q}_i)\right\|}$$

$$\hat{D}_{[s+1]} = \pi\left(\sum_{i\geq 2}(\vec{q}_i \cdot \vec{d}_{[s+1]}^T \cdot \hat{U}_{1,i})\right)$$

the sequence $\{\vec{d}_{[s]}\}$ being an auxiliary second sequence of vectors and the sequence $\{\hat{D}_{[s]}\}$ converging to $\widehat{D\{\hat{D}_{[s]}\}}$ ; and

- stopping in a seventh substep (220) the iterative process carried out throughout the sixth substep (218) when the limit *D* is approximated with a sufficient precision defined by a preset threshold value.

4. Method for dual harmonization of a DDP posture-detecting subsystem integrated into a worn head-up viewing system according to claim 1, wherein and in a third configuration (302),

the number of erroneous or inexploitable degrees of angular freedom of the right-side bias rotation matrix *D* is equal to three and the number of erroneous or inexploitable degrees of angular freedom of the left-side bias rotation matrix $\hat{G}$ is equal to three, and

the first step (304) carries out a number N higher than or equal to 4 of measurements for which the targeting actions Vi correspond to an alignment of multiple different targeting directions $\vec{x}_i$ with multiple targeted exterior directions $\vec{y}_i$ that are known in the reference exterior coordinate system $R_{Ref}$, without roll adjustment, the vector families $\{\vec{x}_i\}$ and $\{\vec{y}_i\}$ both being free; and

the second step (306) of solving the system of dual harmonization equations: $\vec{y}_i = \hat{G} \cdot \hat{K}_i \cdot \hat{D} \cdot \vec{x}_i$ for i varying from 1 to N comprises a third set (312) of the following substeps consisting in:

- in an initialization eighth substep (314), initializing a first sequence of left matrices $\{\widehat{G}_{[s]}\}$ , [s] designating the integer rank of advancement through this first sequence, by setting $\hat{G}_{[0]}$ equal to $I_3$, $I_3$ being the identity matrix; then
- repeating an iterative ninth substep (316) passing from iteration [s+] to iteration [s+1] by calculating the matrix $\hat{D}_{[s+1]}$ then the matrix $\hat{G}_{[s+1]}$ using the following equations:

$$\widehat{D}_{[s+1]} = \pi\left(\sum_{i\geq1}\left(\widehat{K}_i^{\ T} \cdot \widehat{G}^T_{\ [s]} \cdot \vec{y}_i \cdot \vec{x}_i^{\ T}\right)\right)$$

$$\widehat{G}_{[s+1]} = \pi\left(\sum_{i\geq1}\left(\vec{y}_i \cdot \vec{x}_i^{\ T} \cdot \widehat{D}^T_{\ [s+1]} \cdot \widehat{K}_i^{\ T}\right)\right)$$

the sequence $\{\hat{D}_{[s]}\}$ being a second sequence of right matrices, and the sequences $\hat{D}_{[s]}$ and $\hat{G}_{[s]}$ converging to $\hat{D}$ and $\hat{G}$, respectively; and
- stopping in a stopping tenth substep (318) the iterative process executed throughout the ninth substep (316) when the limits $\hat{D}$ and $\hat{G}$ are approximated with a sufficient precision.

5. Method for dual harmonization of a DDP posture-detecting subsystem integrated into a worn head-up viewing system according to claim 1, wherein and in a fourth configuration (402),

the number of erroneous or inexploitable degrees of angular freedom of the right-side bias rotation matrix $D$ is equal to three and the left-side bias rotation matrix $\hat{G}$ is assumed to be known, and
the first step (404) carries out a number N higher than or equal to 3 of measurements for which the targeting actions Vi correspond to an alignment of N different targeting directions $\vec{x}_i$ with one and the same targeted direction $\vec{y_0}$, which is known in the reference exterior coordinate system $R_{Ref}$, without roll adjustment, the vector family $\{\vec{x}_i\}$ being free; and
the second step (406) of solving the system of dual harmonization equations: $\hat{G} \cdot \hat{K}_i \cdot \hat{D} \cdot \vec{x}_i = \vec{y_0}$ for i varying from 1 to N determines the right bias rotation matrix $D$ via the following equation:

$$\widehat{D} = \pi\left(\sum_{i\geq1}\left(\widehat{K}_i^{\ T} \cdot \widehat{G}^T \cdot \vec{y}_0 \cdot \vec{x}_i^{\ T}\right)\right)$$

6. Method for dual harmonization of a DDP posture-detecting subsystem integrated into a worn head-up viewing system according to claim 1, wherein and in a fifth configuration (502),

the number of erroneous or inexploitable degrees of angular freedom of the right-side bias rotation matrix $\hat{D}$ is equal to three and the left-side bias rotation matrix $\hat{G}$ is assumed to be known, and
the first step (504) carries out a number N higher than or equal to 4 of measurements for which the targeting actions Vi correspond to an alignment of N different targeting directions $\vec{x}_i$ with one and the same unknown targeted exterior direction $\vec{y_0}$, without roll adjustment, the vector family $\{\vec{x}_i\}$ being free; and
the second step (506) of solving the system of dual harmonization equations: $\hat{G} \cdot \hat{K}_i \cdot \hat{D} \cdot \vec{x}_i = \vec{y_0}$ for i varying from 1 to N comprises a fifth set (512) of substeps consisting in:

- in an initialization eleventh substep (514), initializing a first sequence of right matrices $\{\hat{D}_{[s]}\}$, [s] designating the integer rank of advancement through the sequence $\{\hat{D}_{[s]}\}$, by setting $\hat{D}_{[0]}$ equal to $I_3$, $I_3$ being the identity matrix; then
- repeating an iterative twelfth substep (516) passing from iteration [s] to iteration [s+1] by calculating the vector $\vec{y}_{[s+1]}$ then the matrix $\hat{D}_{[s+1]}$ using the following equations:

$$\vec{y}_{[s+1]} = \frac{\sum_{i\geq1}\left(\widehat{G} \cdot \widehat{K}_i \cdot \widehat{D}_{[s]} \cdot \vec{x}_i\right)}{\left\|\sum_{i\geq1}\left(\widehat{G} \cdot \widehat{K}_i \cdot \widehat{D}_{[s]} \cdot \vec{x}_i\right)\right\|}$$

$$\widehat{D}_{[s+1]} = \pi\left(\sum_{i \geq 1}\left(\widehat{K}_i^{\mathrm{T}} \cdot \widehat{G}^{\mathrm{T}} \cdot \vec{y}_{[s+1]} \cdot \vec{x}_i^{\mathrm{T}}\right)\right)$$

the sequence $\{\vec{y}_{[s]}\}$ being a second sequence of external direction vectors, and the sequences $\{\vec{y}_{[s]}\}$ and $\{\widehat{D}_{[s]}\}$ converging to $\vec{y}_0$ and $\hat{D}$, respectively; and

- stopping in a stopping thirteenth substep (518) the iterative process carried out throughout the twelfth substep (516) when the limits $\hat{D}$ and $\hat{G}$ are approximated with a sufficient precision defined by one or two preset threshold values.

**7.** Method for dual harmonization of a DDP posture-detecting subsystem integrated into a worn head-up viewing system according to claim 1, wherein and in a sixth configuration (602),

- the number of erroneous or inexploitable degrees of angular freedom of the right-side bias rotation matrix $\hat{D}$ is equal to three and the left-side bias rotation matrix $\hat{G}$ is unknown and indeterminable, and
- the first step (604) carries out a number N higher than or equal to 4 of measurements for which the targeting actions Vi correspond to an alignment of N different targeting directions $\vec{x}_i$ with one and the same unknown targeted exterior direction $\vec{y}_0$, without roll adjustment, the vector family $\{\vec{x}_i\}$ being free, and reduces the resolution of the system of dual harmonization equations: $\hat{G} \cdot \hat{K}_i \cdot \hat{D} \cdot \vec{x}_i = \vec{y}_0$ for i varying from 1 to N to the resolution of the reduced system of dual harmonization equations:
$\hat{K}_i \cdot \hat{D} \cdot \vec{x}_i = \vec{z}_0$ for i varying from 1 to 4, noting $\vec{z}_0 = \hat{G}^{\mathrm{T}} \cdot \vec{y}_0$; and
- the second step (608) of solving the reduced system of dual harmonization equations comprises a sixth set (612) of substeps consisting in:
- in an initialization fourteenth substep (614), initializing a first sequence of right matrices $\{\hat{D}_{[s]}\}$, [s] designating the integer rank of advancement through the sequence $\{\hat{D}_{[s]}\}$, $\hat{D}_{[0]}$ being set equal to $I_3$, $I_3$ being the identity matrix; then
- repeating an iterative fifteenth substep (616) passing from iteration [s] to iteration [s+1] by calculating the vector $\vec{z}_{[s+1]}$ then the matrix $\hat{D}_{[s+1]}$ of the first matrix sequence using the following equations:

$$\vec{z}_{[s+1]} = \frac{\sum_{i \geq 1}\left(\widehat{K}_i \cdot \widehat{D}_{[s]} \cdot \vec{x}_i\right)}{\left\|\sum_{i \geq 1}\left(\widehat{K}_i \cdot \widehat{D}_{[s]} \cdot \vec{x}_i\right)\right\|}$$

$$\widehat{D}_{[s+1]} = \pi\left(\sum_{i \geq 1}\left(\widehat{K}_i^{\mathrm{T}} \cdot \vec{z}_{[s+1]} \cdot \vec{x}_i^{\mathrm{T}}\right)\right)$$

the sequence $\{\vec{z}_{[s]}\}$ being a second auxiliary sequence of vectors and the sequence $\{\hat{D}_{[s]}\}$ converging to $\hat{D}$; and
- stopping in a stopping sixteenth substep (618) the iterative process carried out throughout the fifteenth substep (616) when the limit $\hat{D}$ is approximated with a sufficient precision defined by a preset threshold value.

**8.** Method for dual harmonization of a DDP posture-detecting subsystem integrated into a worn head-up viewing system according to claim 1, wherein and in a seventh configuration (702),

the number of erroneous or inexploitable degrees of angular freedom of the left-side bias rotation matrix $\hat{G}$ is equal to three and the right-side bias rotation matrix $\hat{D}$ is assumed to be known; and
the first step (704) carries out a number N higher than or equal to 3 of measurements for which the targeting actions Vi correspond to an alignment of one and the same known targeting direction $\vec{x}_0$ with N known targeted exterior directions $\vec{y}_i$, without roll adjustment, the vector family $\{\vec{y}_i\}$ being free, and
the second step (706) of solving the system of dual harmonization equations: $\hat{G} \cdot \hat{K}_i \cdot \hat{D} \cdot \vec{x}_0 = \vec{y}_i$ for i varying from 1 to N determines the sought left rotation matrix $\hat{G}$ using the equation:

$$\widehat{G} = \pi\left(\sum_{i\geq 1}\left(\vec{y}_i \cdot \vec{x}_0^{\ T} \cdot \widehat{D}^T \cdot \widehat{K}_i^{\ T}\right)\right)$$

**9.** Method for dual harmonization of a DDP posture-detecting subsystem integrated into a worn head-up viewing system according to claim 1, wherein and in an eighth configuration (802),

- the number of erroneous or inexploitable degrees of angular freedom of the left-side bias rotation matrix $\widehat{G}$ is equal to three and the right-side bias rotation matrix $\widehat{D}$ is assumed to be known, and

the first step (804) carries out a number N higher than or equal to 4 of measurements for which the targeting actions Vi correspond to an alignment of one and the same unknown targeting direction $\vec{x}_0$ with N known targeted exterior directions $\vec{y}_i$, without roll adjustment, the vector family $\{\vec{y}_i\}$ being free; and
the second step (806) of solving the system of dual harmonization equations: $\widehat{G} \cdot \widehat{K}_i \cdot \widehat{D} \cdot \vec{x}_0 = \vec{y}_i$ for i varying from 1 to N comprises an eighth set (812) of substeps consisting in:

- in a seventeenth substep (814), initializing a first sequence of left matrices $\{\widehat{G}_{[s]}\}$, [s] designating the integer rank of advancement through the sequence $\{\widehat{G}_{[s]}\}$, by setting $\widehat{G}_{[0]}$ equal to $I_3$, $I_3$ being the identity matrix; then
- repeating an iterative eighteenth substep (816) passing from iteration [s] to iteration [s+1] by calculating the vector $\vec{x}_{[s+1]}$ then the matrix $\widehat{G}_{[s+1]}$ using the following equations:

$$\vec{x}_{[s+1]} = \frac{\sum_{i\geq 1}\left(\widehat{D}^T \cdot \widehat{K}_i^{\ T} \cdot \widehat{G}_{[s]}^T \cdot \vec{y}_i\right)}{\left\|\sum_{i\geq 1}\left(\widehat{D}^T \cdot \widehat{K}_i^{\ T} \cdot \widehat{G}_{[s]}^T \cdot \vec{y}_i\right)\right\|}$$

$$\widehat{G}_{[s+1]} = \pi\left(\sum_{i\geq 1}\left(\vec{y}_i \cdot \vec{x}_{[s+1]}^{\ T} \cdot \widehat{D}^T \cdot \widehat{K}_i^{\ T}\right)\right)$$

the sequence $\{\vec{x}_{[s]}\}$ being a second sequence of sight direction vectors, the sequences $\widehat{G}_{[s]}$ and $\vec{x}_{[s]}$ converging to $\widehat{G}$ and $\vec{x}_0$, respectively; and
- in a stopping nineteenth substep (818) stopping the iterative process carried out throughout the eighteenth substep (816) when the limits $\widehat{G}$ and optionally $\vec{x}_0$ are approximated with a sufficient precision defined by one or two preset threshold values.

**10.** Method for dual harmonization of a DDP posture-detecting subsystem integrated into a worn head-up viewing system according to any one of claims 1 to 9, wherein
the worn head-up viewing system (2) is located on-board a carrier vehicle comprised in the set of all aircraft, aeroplanes, helicopters, cars and robots.

**11.** Worn head-up viewing system located on-board a carrier vehicle and comprising:

- a transparent worn head-up viewing device (12) $D_v$,
- a reference device (14) $D_{ref}$ having a reference coordinate system $R_{ref}$, that can be either a coordinate system of the carrier vehicle or a local geographic coordinate system or a terrestrial coordinate system;
- a DDP posture-detecting subsystem (16) having:

a tracking solid first element (18) S1 tightly attached to the viewing device (12) $D_v$;
a fixed solid second element (20) S2 tightly joined to the reference device (14) $D_{ref}$, and
a means (26) for measuring and determining the relative orientation $\widehat{K}$ of the first mobile tracking element (18) S1 with respect to the fixed second element (22) S2,

- a dual harmonization subsystem (32) for harmonizing the head-up viewing system (2) and the DDP posture-detecting subsystem (16), the dual harmonization subsystem (32) having a dual harmonization processor and an HMI interface for managing the acquisitions of the harmonization measurements,

the dual harmonization subsystem (32) and the DDP posture-detecting subsystem (16) are configured to:

- in a first step (54), carry out a series of a preset number N of measurements of relative orientations $\hat{K}_i$, i varying from 1 to N, of the first mobile tracking element (18) S1 with respect to the fixed second element (22) S2 of the DDP posture-detecting subsystem (16), corresponding to different targeting actions Vi, i varying from 1 to N, in which measurements one or more different preset elements of steering information displayed in the viewing device (12) $D_v$ are superposed or aligned with one or more corresponding landmarks of the real outside world; then

- in a second step (56), and using a dual harmonization algorithm, conjointly calculate the relative orientation matrix $\hat{R}(S1/v)$ of the tracking first element (18) S1 of the posture-detecting subsystem (16) with respect to viewing device $D_v$ and/or the relative orientation matrix $\hat{R}(ref/S2)$ of the external reference device $D_{Ref}$ with respect to fixed solid second element (20) S2 of the posture-detecting subsystem (16) respectively as the right-side bias rotation matrix $D$ and the left-side bias rotation matrix $\hat{G}$, which are conjoint solutions of the system of dual harmonization equations: $\hat{U}_i = \hat{G} \cdot \hat{K}_i \cdot \hat{D}$, i varying from 1 to N,

the worn head-up viewing system being **characterized in that** the minimum required number N of measurements depends on the number L of erroneous or inexploitable degrees of angular freedom of the rotation matrices $\hat{R}(S1/v)$ and $\hat{R}(ref/S2)$ of the head-up viewing system, said number L being an integer higher than or equal to 1 and lower than or equal to 6, and

the resolution of the system of equations $\hat{U}_i = \hat{G} \cdot \hat{K}_i \cdot \hat{D}$, i varying from 1 to N, uses a rectification operator $\pi(.)$ that converts any matrix A into a 3x3 square rotation matrix $\pi(A)$, which matrix $\pi(A)$, of all the 3x3 rotation matrices, is the closest in the least-squares sense to all of the terms of the matrix $\pi(A)$ - A, to determine the right-side rotation $\hat{D}$ and the left-side rotation $\hat{G}$.

12. Worn head-up viewing system located on-board a carrier vehicle, according to claim 11, wherein the dual harmonization subsystem (32) and the DDP posture-detecting subsystem (16) are configured to implement the first and second steps such as defined in any one of claims 2 to 10.

13. Carrier vehicle, comprised in the set of all aircraft, aeroplanes, helicopters, cars and robots, and in which is installed a worn head-up viewing system defined according to any one of claims 10 to 12.

FIG.1

52

| 54 |
|---|

↓

| 56 |
|---|

## FIG.2

102

| 104 |
|---|

↓

106

112

| 114 |
|---|

↓

| 116 |
|---|

↓

| 118 |
|---|

## FIG.3

202

204

206

214

216

212

218

220

FIG.4

302

304

306

312

314

316

318

FIG.5

402

404

406

FIG.6

502

| 504 |
|:---:|

506

512

| 514 |
|:---:|

| 516 |
|:---:|

| 518 |
|:---:|

## FIG.7

602

| 604 |
|:---:|

606

612

| 614 |
|:---:|

| 616 |
|:---:|

| 618 |
|:---:|

## FIG.8

702

```
┌─────────────────────┐
│        704          │
└─────────────────────┘
          │
          ▼
┌─────────────────────┐
│        706          │
└─────────────────────┘
```

## FIG.9

802

```
┌──────────────────────────┐
│           804            │
└──────────────────────────┘
          │
          ▼
  ┌────────────────────────────┐
  │  ┌──────────────────────┐  │   812
  │  │         814          │  │
  │  └──────────────────────┘  │
806 │            │              │
  │            ▼              │
  │  ┌──────────────────────┐  │
  │  │         816          │  │
  │  └──────────────────────┘  │
  │            │              │
  │            ▼              │
  │  ┌──────────────────────┐  │
  │  │         818          │  │
  │  └──────────────────────┘  │
  └────────────────────────────┘
```

## FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2703928 A1

**Littérature non-brevet citée dans la description**

- Single point active alignment method (SPAAM) for optical see-through HMD calibration for AR. **TUCERYAN M. et al.** Augmented Reality, 2000, (ISAR 2000), Symposium on Munich. IEEE, 05 Octobre 2000, 149-158
- Practical Solutions for Calibration of Optical See-Through Devices. **YAKUP GENC et al.** Proceedings / International Symposium on mixed and augmented reality: ISMAR 2002. IEEE Computer Society, 30 Septembre 2002
- A survey of calibration methods for optical See-Through Head-Mounted displays. **JENS GRUBERT et al.** ARXIV.ORG. Cornell University Library, 13 Septembre 2017
- Calibration Requirements and Procédures for a Monitor-based Augmented Reality System. **TUCERYAN M. et al.** IEEE Transactions on Visualization and Computer Graphics. IEEE Service Center Los Alamitos, 01 Septembre 1995, vol. 1, 255-273